# EUROPEAN PATENT APPLICATION

(11) **EP 4 651 576 A1**
(43) Date of publication of application: **19.11.2025**
(21) Application number: 24752826.8
(22) Date of filing: 04.02.2024
(51) Int. Cl.: H04W 52/02

(54) **COMMUNICATION METHOD AND APPARATUS**

(30) Priority: 06.02.2023 CN 202310145346; 13.03.2023 CN 202310303785
(71) Applicant: Huawei Technologies Co., Ltd., Shenzhen, Guangdong 518129 (CN)
(72) Inventor: XUE, Yifan, Shenzhen, Guangdong 518129 (CN); KUANG, Yiru, Shenzhen, Guangdong 518129 (CN); XUE, Lixia, Shenzhen, Guangdong 518129 (CN)
(74) Representative: Grünecker Patent- und Rechtsanwälte PartG mbB
(86) International application number: PCT/CN2024/075746
(87) International publication number: WO 2024/164971

(57) **Abstract**

A communication method and apparatus are provided, to provide a solution to monitoring an LP-WUS by a terminal device. A terminal device determines whether a condition for monitoring a low power wake up signal LP-WUS is met; and the terminal device monitors the LP-WUS when determining that the condition for monitoring the LP-WUS is met. The LP-WUS is for waking up the terminal device. Therefore, how to activate a related procedure of monitoring the LP-WUS by the terminal device may be provided.

## Description

### CROSS-REFERENCE TO RELATED APPLICATIONS

This application claims priorities to Chinese Patent Application No. 202310145346.X, filed with the China National Intellectual Property Administration on February 6, 2023 and entitled "METHOD FOR MONITORING LP-WUS IN CONNECTED STATE", and to Chinese Patent Application No. 202310303785.9, filed with the China National Intellectual Property Administration on March 13, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

Usually, a terminal device receives any downlink signal from a network device by using a same receiving module (or receiver, or receiver circuit). For example, a module that completes these functions (or performs related steps) may be referred to as a main circuit. However, when the terminal device receives downlink signals by using the main circuit, power consumption is high.

To reduce power consumption caused by receiving downlink signals by the terminal device, a possible method is as follows: The terminal device may use a separate low power simplified circuit to receive a part of downlink signals. The simplified circuit may be referred to as a wake up circuit, a low power circuit, a wake up radio (low power wake up radio, LP-WUR), or another name. The downlink signal received by the wake up circuit may be referred to as a low power wake up signal (low power wake up signal, LP-WUS) (also referred to as a wake up signal).

In an IDLE/INACTIVE state, the LP-WUS may be for carrying paging-related information. In a connected (CONNECTED) state, the LP-WUS may be for carrying scheduling-related information. For example, the LP-WUS indicates whether the terminal device needs to turn on the main circuit to receive scheduling information (for example, whether a physical downlink control channel (physical downlink control channel, PDCCH) needs to be monitored). However, currently there is no solution of how to monitor an LP-WUS in a connected state.

### SUMMARY

This application provides a solution to monitoring an LP-WUS by a terminal device.

According to a first aspect, this application provides a communication method. The method may be applied to a terminal device or a processor, a chip, or a functional module in the terminal device. For example, the method is applied to the terminal device. The method may include: The terminal device determines whether a condition for monitoring a low power wake up signal LP-WUS is met; and the terminal device monitors the LP-WUS when determining that the condition for monitoring the LP-WUS is met. The LP-WUS is for waking up the terminal device. Therefore, a solution to monitoring an LP-WUS by a terminal device is provided.

In a possible design, a method used by the terminal device to determine that the condition for monitoring the LP-WUS is met may be: The terminal device receives first information from a network device, where the first information indicates the terminal device to monitor the LP-WUS. In this way, the network device may directly indicate, based on the first information, the terminal device to monitor the LP-WUS. This is simple to implement, and can avoid a case in which the terminal device and the network device cannot align whether to monitor the LP-WUS because the terminal device misses detecting scheduling information.

In a possible design, a method used by the terminal device to determine that the condition for monitoring the LP-WUS is met may be: The terminal device determines that scheduling information is not received from the network device in a first duration. In this way, the terminal device can determine, by itself depending on whether the scheduling information is received, that the LP-WUS can be monitored, thereby reducing signaling overheads.

In a possible design, that the terminal device determines that the condition for monitoring the LP-WUS is met may further include the following method: The terminal device determines that a first channel quality parameter is greater than or equal to a first threshold, where the first channel quality parameter is at least one of the following: reference signal received power (reference signal received power, RSRP), reference signal received quality (reference signal received quality, RSRQ), an LP-WUS detection probability, or a low-power synchronization signal (low-power synchronization signal, LP-SS) detection probability. In this way, the terminal device can further determine, based on an actual status of a current channel, whether to monitor the LP-WUS, to avoid an LP-WUS monitoring failure caused by a poor channel state.

In a possible design, the terminal device may start to monitor the LP-WUS at a first moment. In this way, when the terminal device starts to monitor the LP-WUS can be determined, so that the terminal device and the network device can align time when the terminal device starts to monitor the LP-WUS.

In a possible design, the first moment is related to a second moment, and the second moment may be a moment at which the terminal device receives the first information, or an end moment of the first duration. In this way, a time location of the first moment can be determined based on the second moment, to determine when the terminal device starts to monitor the LP-WUS, so that the terminal device and the network device can align the time when the terminal device starts to monitor the LP-WUS.

In a possible design, when the terminal device monitors the LP-WUS, the terminal device may determine whether a condition for monitoring a PDCCH is met; and the terminal device monitors the PDCCH when determining that the condition for monitoring the PDCCH is met. In this way, a case in which the terminal device needs to monitor the PDCCH when monitoring the LP-WUS can be determined.

In a possible design, a method used by the terminal device to determine that the condition for monitoring the PDCCH is met may be: A first condition and/or a second condition are/is met. The first condition may include: The terminal device detects the LP-WUS from the network device; the terminal device sends uplink service information; or the terminal device does not detect the LP-WUS in a second duration. The second condition includes: The terminal device determines that a second channel quality parameter is less than or equal to a second threshold, where the second channel quality parameter is at least one of the following: RSRP, RSRQ, an LP-WUS detection probability, or an LP-SS detection probability. In this way, how the terminal device starts to monitor the PDCCH can be determined.

In a possible design, the terminal device may start to monitor the PDCCH at a third moment. In this way, when the terminal device may start to monitor the PDCCH can be determined, so that the terminal device and the network device can align time when the terminal device starts to monitor the PDCCH.

In a possible design, before the terminal device monitors the PDCCH, the terminal device may send feedback information to the network device after the third moment, where the feedback information indicates that the terminal device does not monitor the LP-WUS or indicates that the terminal device starts to monitor the PDCCH. In this way, the network device and the terminal device can align the time when the terminal device starts to monitor the PDCCH.

In a possible design, the third moment is related to a fourth moment, and the fourth moment may be a moment at which the terminal device detects the LP-WUS, a moment at which transmission of the uplink service information is completed, or an end moment of the second duration. In this way, when the terminal device starts to monitor the PDCCH can be determined, so that the terminal device and the network device can align the time when the terminal device starts to monitor the PDCCH.

In a possible design, connected discontinuous reception (connected discontinuous reception, C-DRX) is configured for the terminal device, and the terminal device may not monitor the PDCCH when monitoring the LP-WUS within active time. Therefore, specific behavior of the terminal device monitoring the LP-WUS if C-DRX is configured for the terminal device can be determined. When monitoring the LP-WUS, the terminal device does not monitor the PDCCH even in the active time, which helps reduce power consumption of the terminal device.

In a possible design, connected discontinuous reception C-DRX is configured for the terminal device. The terminal device may monitor the LP-WUS within the active time or outside the active time; and if the terminal device detects the LP-WUS within the active time, the terminal device monitors the PDCCH after a third duration starting from the moment at which the LP-WUS is detected; or if the terminal device detects the LP-WUS outside the active time, the terminal device monitors the PDCCH after a fourth duration starting from the moment at which the LP-WUS is detected, where the third duration is the same as or different from the fourth duration. Therefore, specific behavior of the terminal device monitoring the LP-WUS and a method for starting to monitor the PDCCH if C-DRX is configured for the terminal device can be determined.

In a possible design, the active time may include at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier (C-RNTI) of a medium access control (MAC) entity has not been received, where the random access preamble is not selected by the MAC entity from contention-based random access preambles. In this way, the terminal device can determine which time belongs to the active time.

In a possible design, after detecting the LP-WUS, the terminal device may stop monitoring the LP-WUS and start a first timer, where the active time includes running time of the first timer. In this way, after the terminal device detects the LP-WUS, the terminal device can be immediately in the active time, thereby reducing a delay in monitoring the PDCCH by the terminal device.

In a possible design, the terminal device starts to monitor the PDCCH within running time of the first timer within the active time. In this way, after the terminal device detects the LP-WUS, the terminal device can immediately start to monitor the PDCCH, thereby reducing a delay in monitoring the PDCCH by the terminal device.

In a possible design, after detecting the LP-WUS, the terminal device stops monitoring the LP-WUS, and starts to monitor the PDCCH within the active time closest to the moment at which the LP-WUS is detected. In this way, no additional timer needs to be introduced, and complexity of implementing PDCCH monitoring is low.

In a possible design, the terminal device is configured to monitor downlink control information scrambled by a power saving radio network temporary identifier (DCI with cyclic redundancy check scrambled by power saving radio network temporary identifier, DCP). The terminal device does not monitor the DCP when monitoring the LP-WUS. Therefore, specific behavior of the terminal device monitoring the LP-WUS if the DCP is configured for the terminal device can be determined.

In a possible design, if the terminal device does not detect the DCP on a monitoring occasion of the DCP when monitoring the LP-WUS, the terminal device determines not to start a DRX ON duration timer. Therefore, specific behavior of the terminal device monitoring the LP-WUS if the DCP is configured for the terminal device can be determined. When monitoring the LP-WUS, the terminal device does not monitor the DCP, which helps reduce power consumption of the terminal device.

In a possible design, a method used by the terminal device to determine not to start the DRX ON duration timer may be: A physical layer of the terminal device sends first indication information to a medium access control layer of the terminal device, where the first indication information indicates that a decoding result of the DCP is 0; and the medium access control layer of the terminal device determines, based on the first indication information, not to start the DRX ON duration timer; or the medium access control layer of the terminal device determines, based on that the terminal device is monitoring the LP-WUS, not to start the DRX ON duration timer. Therefore, the terminal device can determine a specific method for not starting the DRX ON duration timer.

In a possible design, when monitoring the LP-WUS, the terminal device does not monitor PDCCH monitoring adaptation indication information, where the PDCCH monitoring adaptation indication information indicates at least one of PDCCH skipping or search space set group switching. Therefore, specific behavior of the terminal device monitoring the LP-WUS if the PDCCH monitoring adaptation indication information is configured for the terminal device can be determined. When monitoring the LP-WUS, the terminal device does not monitor the PDCCH monitoring adaptation indication information, which helps reduce power consumption of the terminal device.

In a possible design, the LP-WUS is for waking up the terminal device, and a method may be as follows: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device. Therefore, the terminal device can be flexibly woken up based on the LP-WUS in a plurality of manners.

In a possible design, after detecting the LP-WUS, the terminal device monitors the PDCCH within a fifth duration; and if the PDCCH of the network device is not received in the fifth duration, the terminal device starts to monitor the LP-WUS, where the fifth duration may be included in the LP-WUS, or the fifth duration may be included in configuration information of the LP-WUS. In this way, a delay in monitoring the LP-WUS can be reduced based on the fifth duration. In addition, scheduling time of the network device can be restricted, so that the terminal device does not turn on, for a long time, a main circuit to monitor the PDCCH, thereby helping the terminal device save energy.

In a possible design, before the terminal device monitors the LP-WUS, the terminal device receives the configuration information of the LP-WUS from the network device. In this way, the terminal device can accurately obtain a related configuration of the LP-WUS.

In a possible design, the LP-WUS uses on off keying (on off keying, OOK) OOK modulation, frequency shift keying (frequency shift keying, FSK) modulation, or a modulation scheme combining OOK and FSK. Therefore, power consumption of a wake up circuit of the terminal device can be reduced.

In a possible design, the LP-WUS is received by a first circuit of the terminal device, the PDCCH is received by a second circuit of the terminal device, and the first circuit is different from the second circuit. In this way, power consumption of the terminal device can be reduced.

According to a second aspect, this application provides a communication method. The method may be applied to a network device or a processor, a chip, or a functional module in the network device. For example, the method is applied to the network device. The method may include: The network device determines whether a terminal device meets a condition for monitoring a low power wake up signal LP-WUS; and if the network device determines that the terminal device meets the condition for monitoring the LP-WUS, sends the LP-WUS to the terminal device when there is an LP-WUS sending requirement. The LP-WUS is for waking up the terminal device. Based on this, the network device can determine when to send the LP-WUS to the terminal device. In this application, that the network device sends the LP-WUS to the terminal device when there is the LP-WUS sending requirement may be understood as that the network device determines that the terminal device monitors the LP-WUS.

In a possible design, a method used by the network device to determine that the terminal device meets the condition for monitoring the LP-WUS may be: The network device sends first information to the terminal device, where the first information indicates the terminal device to monitor the LP-WUS. In this way, the network device may directly indicate, based on the first information, the terminal device to monitor the LP-WUS. This is simple to implement, and can avoid a case in which the terminal device and the network device cannot align whether to monitor the LP-WUS because the terminal device misses detecting scheduling information.

In a possible design, the network device determines that scheduling information is not sent to the terminal device in a first duration. In this way, the network device can determine, by itself depending on whether to send the scheduling information, when to send the LP-WUS, thereby reducing signaling overheads.

In a possible design, that the network device determines that the terminal device meets the condition for monitoring the LP-WUS further includes the following method: The network device receives first channel feedback information from the terminal device, where the first channel feedback information indicates that a first channel quality parameter is greater than or equal to a first threshold, where the first channel quality parameter is at least one of the following: RSRP, RSRQ, an LP-WUS detection probability, or an LP-SS detection probability. Therefore, the network device can further determine, based on an actual status of a current channel, whether the LP-WUS can be sent, to avoid an LP-WUS sending failure caused by a poor channel state.

In a possible design, a method used the network device to send the LP-WUS to the terminal device when there is the LP-WUS sending requirement may be as follows: The network device may send the LP-WUS to the terminal device from a first moment and when there is the LP-WUS sending requirement. In this way, when the network device may start to send the LP-WUS can be determined, so that the terminal device and the network device can align time when the terminal device starts to monitor the LP-WUS.

In a possible design, the first moment is related to a second moment, and the second moment is a moment at which the network device sends the first information, or an end moment of the first duration. In this way, a time location of the first moment can be determined based on the second moment, to determine when the network device may start to send the LP-WUS, so that the terminal device and the network device can align the time when the terminal device starts to monitor the LP-WUS.

In a possible design, after determining that the terminal device meets the condition for monitoring the LP-WUS, the network device may determine whether the terminal device meets the condition for monitoring a downlink control channel PDCCH; and after determining that the terminal device meets the condition for monitoring the PDCCH, the network device sends the PDCCH to the terminal device when there is a PDCCH sending requirement. In this way, a case in which the network device can send the PDCCH can be determined. In this application, that the network device sends the PDCCH to the terminal device when there is the PDCCH sending requirement may be understood as that the network device determines that the terminal device monitors the PDCCH.

In a possible design, a method used by the network device to determine that the terminal device meets the condition for monitoring the PDCCH may be: A first condition and/or a second condition are/is met. The first condition may include: The network device sends the LP-WUS to the terminal device when there is the LP-WUS sending requirement; the network device receives uplink service information; or the network device does not send the LP-WUS in a second duration. The second condition may include: The network device receives second channel feedback information from the terminal device, where the second channel feedback information indicates that a second channel quality parameter is less than or equal to a second threshold, where the second channel quality parameter is at least one of the following: RSRP, RSRQ, an LP-WUS detection probability, or an LP-SS detection probability. In this way, how the network device can send the PDCCH can be determined.

In a possible design, a method used the network device to send the PDCCH to the terminal device when there is the PDCCH sending requirement may be as follows: The network device may send the PDCCH to the terminal device from a third moment and when there is the PDCCH sending requirement. In this way, when the network device may start to send the PDCCH can be determined, so that the terminal device and the network device can align time when the terminal device starts to monitor the PDCCH.

In a possible design, before the network device sends the PDCCH to the terminal device when there is the PDCCH sending requirement, the network device receives feedback information from the terminal device after a third moment, where the feedback information indicates that the terminal device does not monitor the LP-WUS or indicates that the terminal device starts to monitor the PDCCH. In this way, the network device and the terminal device can align the time when the terminal device starts to monitor the PDCCH.

In a possible design, the third moment is related to a fourth moment, and the fourth moment may be a moment at which the network device sends the LP-WUS, a moment at which transmission of the uplink service information is completed, or an end moment of the second duration. In this way, when the network device may start to send the PDCCH can be determined, so that the terminal device and the network device can align time when the terminal device starts to monitor the PDCCH.

In a possible design, C-DRX is configured for the terminal device. Within active time and when there is the LP-WUS sending requirement, the network device does not send the PDCCH to the terminal device when sending the LP-WUS to the terminal device. Therefore, specific behavior of the network device sending the LP-WUS if C-DRX is configured for the terminal device can be determined. When the terminal device monitors the LP-WUS, the network device does not send the PDCCH even in the active time, so that the terminal device may not monitor the PDCCH. This helps reduce power consumption of the terminal device.

In a possible design, C-DRX is configured for the terminal device. Within the active time or outside the active time, the network device sends the LP-WUS to the terminal device when there is the LP-WUS sending requirement; and if the network device sends the LP-WUS within the active time, the network device sends the PDCCH to the terminal device when determining that there is the PDCCH sending requirement after a third duration starting from a moment at which the LP-WUS is sent; or if the network device sends the LP-WUS outside the active time, the network device sends the PDCCH to the terminal device when determining that there is the PDCCH sending requirement after a fourth duration starting from a moment at which the LP-WUS is sent, where the third duration is the same as or different from the fourth duration. Therefore, specific behavior of the network device sending the LP-WUS and a method for sending the PDCCH if C-DRX is configured for the terminal device can be determined.

In a possible design, the active time may include at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles. In this way, the network device can determine which time belongs to the active time.

In a possible design, after sending the LP-WUS to the terminal device, the network device does not send the LP-WUS to the terminal device and starts a first timer, where the active time includes running time of the first timer. In this way, after the network device sends the LP-WUS, the terminal device can be immediately in the active time, thereby reducing a delay in monitoring the PDCCH by the terminal device.

In a possible design, the network device sends, within the running time of the first timer within the active time, the PDCCH to the terminal device when determining that there is the PDCCH sending requirement. In this way, after the network device sends the LP-WUS, the terminal device can immediately start to monitor the PDCCH, thereby reducing a delay in monitoring the PDCCH by the terminal device.

In a possible design, after sending the LP-WUS to the terminal device, the network device does not send the LP-WUS to the terminal device, and sends, from the active time closest to a moment at which the network device sends the LP-WUS, the PDCCH to the terminal device when there is the PDCCH sending requirement. In this way, no additional timer needs to be introduced, and complexity of implementing PDCCH sending is low.

In a possible design, the terminal device is configured to monitor downlink control information scrambled by a power saving radio network temporary identifier DCP. When determining that there is the LP-WUS sending requirement, the network device does not send the DCP to the terminal device when sending the LP-WUS to the terminal device. Therefore, specific behavior of the network device sending the LP-WUS if DCP is configured for the terminal device can be determined.

In a possible design, if the network device does not send the DCP on a sending occasion of the DCP, the network device determines not to start a DRX ON duration timer. Therefore, specific behavior of the network device sending the LP-WUS if DCP is configured for the terminal device can be determined. In addition, when monitoring the LP-WUS, the terminal device may not monitor the DCP, which helps reduce power consumption of the terminal device.

In a possible design, when there is the LP-WUS sending requirement, the network device does not send PDCCH monitoring adaptation indication information to the terminal device when sending the LP-WUS to the terminal device, where the PDCCH monitoring adaptation indication information indicates at least one of PDCCH skipping or search space set group switching. Therefore, specific behavior of the network device sending the LP-WUS if the PDCCH monitoring adaptation indication information is configured for the terminal device can be determined. In addition, when monitoring the LP-WUS, the terminal device does not monitor the PDCCH monitoring adaptation indication information, which helps reduce power consumption of the terminal device.

In a possible design, the LP-WUS is for waking up the terminal device, and a method may include: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device. Therefore, the terminal device can be flexibly woken up based on the LP-WUS in a plurality of manners.

In a possible design, after the network device sends the LP-WUS to the terminal device, the network device sends the PDCCH to the terminal device when there is the PDCCH sending requirement in a fifth duration; and if the network device determines that the PDCCH is not sent to the terminal device in the fifth duration, the network device sends the LP-WUS to the terminal device when there is the LP-WUS sending requirement, where the fifth duration is included in the LP-WUS, or the fifth duration is included in configuration information of the LP-WUS. In this way, a delay in monitoring the LP-WUS by the terminal device can be reduced based on the fifth duration. In addition, scheduling time of the network device can be restricted, so that the terminal device does not turn on, for a long time, a main circuit to monitor the PDCCH, thereby helping the terminal device save energy.

In a possible design, before the network device sends the LP-WUS to the terminal device when determining that the terminal device meets the condition for monitoring the LP-WUS and there is the LP-WUS sending requirement, the network device sends the configuration information of the LP-WUS to the terminal device. In this way, the terminal device can accurately obtain a related configuration of the LP-WUS.

In a possible design, the LP-WUS uses on off keying OOK modulation, frequency shift keying FSK modulation, or a modulation scheme combining OOK and FSK. Therefore, power consumption of a wake up circuit of the terminal device can be reduced.

According to a third aspect, this application provides a communication method. The method may be applied to a terminal device or a processor, a chip, or a functional module in the terminal device. The method may include: A terminal device is configured with C-DRX by a network device; and the terminal device monitors an LP-WUS within active time, and deactivates PDCCH monitoring within the active time. The LP-WUS is for waking up the terminal device. Therefore, specific behavior of the terminal device monitoring the LP-WUS if C-DRX is configured for the terminal device can be determined. When monitoring the LP-WUS, the terminal device does not monitor the PDCCH even in the active time, which helps reduce power consumption of the terminal device.

In a possible design, the active time may include at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles. In this way, the terminal device can determine which time belongs to the active time.

In a possible design, if the terminal device detects the LP-WUS within the active time, the terminal device monitors the PDCCH after a third duration starting from a moment at which the LP-WUS is detected. Alternatively, the terminal device may monitor the LP-WUS outside the active time. If the terminal device detects the LP-WUS outside the active time, the terminal device monitors the PDCCH after a fourth duration starting from a moment at which the LP-WUS is detected. The third duration is the same as or different from the fourth duration. Therefore, specific behavior of the terminal device monitoring the LP-WUS and a method for starting to monitor the PDCCH if C-DRX is configured for the terminal device can be determined.

In a possible design, after detecting the LP-WUS, the terminal device stops monitoring the LP-WUS and starts a first timer, where the active time includes running time of the first timer. In this way, after the terminal device detects the LP-WUS, the terminal device can be immediately in the active time, thereby reducing a delay in monitoring the PDCCH by the terminal device.

In a possible design, the terminal device starts to monitor the PDCCH within running time of the first timer within the active time. In this way, after the terminal device detects the LP-WUS, the terminal device can immediately start to monitor the PDCCH, thereby reducing a delay in monitoring the PDCCH by the terminal device.

In a possible design, after detecting the LP-WUS, the terminal device stops monitoring the LP-WUS, and starts to monitor the PDCCH within the active time closest to the moment at which the LP-WUS is detected. In this way, no additional timer needs to be introduced, and complexity of implementing PDCCH monitoring is low.

In a possible design, the terminal device is configured to monitor downlink control information scrambled by a power saving radio network temporary identifier DCP. The terminal device does not monitor the DCP when monitoring the LP-WUS. Therefore, specific behavior of the terminal device monitoring the LP-WUS if the DCP is configured for the terminal device can be determined.

In a possible design, if the terminal device does not detect the DCP on a monitoring occasion of the DCP when monitoring the LP-WUS, the terminal device determines not to start a DRX ON duration timer. Therefore, specific behavior of the terminal device monitoring the LP-WUS if the DCP is configured for the terminal device can be determined. When monitoring the LP-WUS, the terminal device does not monitor the DCP, which helps reduce power consumption of the terminal device.

In a possible design, a method used by the terminal device to determine not to start the DRX ON duration timer may be: A physical layer of the terminal device sends first indication information to a medium access control layer of the terminal device, where the first indication information indicates that a decoding result of the DCP is 0; and the medium access control layer of the terminal device determines, based on the first indication information, not to start the DRX ON duration timer; or the medium access control layer of the terminal device determines, based on that the terminal device is monitoring the LP-WUS, not to start the DRX ON duration timer. Therefore, the terminal device can determine a specific method for not starting the DRX ON duration timer.

In a possible design, when monitoring the LP-WUS, the terminal device does not monitor PDCCH monitoring adaptation indication information, where the PDCCH monitoring adaptation indication information indicates at least one of PDCCH skipping or search space set group switching. Therefore, specific behavior of the terminal device monitoring the LP-WUS if the PDCCH monitoring adaptation indication information is configured for the terminal device can be determined. When monitoring the LP-WUS, the terminal device does not monitor the PDCCH monitoring adaptation indication information, which helps reduce power consumption of the terminal device.

In a possible design, the LP-WUS is for waking up the terminal device, and a method may be as follows: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device. Therefore, the terminal device can be flexibly woken up based on the LP-WUS in a plurality of manners.

In a possible design, after detecting the LP-WUS, the terminal device monitors the PDCCH within a fifth duration; and if the PDCCH of the network device is not received in the fifth duration, the terminal device starts to monitor the LP-WUS, where the fifth duration is included in the LP-WUS, or the fifth duration is included in configuration information of the LP-WUS. In this way, a delay in monitoring the LP-WUS can be reduced based on the fifth duration. In addition, scheduling time of the network device can be restricted, so that the terminal device does not turn on, for a long time, a main circuit to monitor the PDCCH, thereby helping the terminal device save energy.

In a possible design, before the terminal device monitors the LP-WUS within the active time, the terminal device may receive the configuration information of the LP-WUS from the network device. In this way, the terminal device can accurately obtain a related configuration of the LP-WUS.

In a possible design, the LP-WUS uses on off keying OOK modulation, frequency shift keying FSK modulation, or a modulation scheme combining OOK and FSK. Therefore, power consumption of a wake up circuit of the terminal device can be reduced.

In a possible design, the LP-WUS is received by a first circuit of the terminal device, the PDCCH is received by a second circuit of the terminal device, and the first circuit is different from the second circuit. In this way, power consumption of the terminal device can be reduced.

According to a fourth aspect, this application provides a communication method. The method may be applied to a network device or a processor, a chip, or a functional module in the network device. The method may include: The network device configures C-DRX for a terminal device; and the network device sends an LP-WUS to the terminal device when there is a low power wake up signal LP-WUS sending requirement within active time. The LP-WUS is for waking up the terminal device and deactivating sending of a PDCCH. Therefore, specific behavior of the network device sending the LP-WUS if C-DRX is configured for the terminal device can be determined. When the terminal device monitors the LP-WUS, the network device does not send the PDCCH even in the active time, so that the terminal device may not monitor the PDCCH. This helps reduce power consumption of the terminal device.

In a possible design, the active time may include at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles. In this way, the network device can determine which time belongs to the active time.

In a possible design, if the network device sends the LP-WUS within the active time, the network device sends the PDCCH to the terminal device when determining that there is the PDCCH sending requirement after a third duration starting from a moment at which the LP-WUS is sent. Alternatively, the network device may send the LP-WUS to the terminal device when there is the LP-WUS sending requirement outside the active time. If the network device sends the LP-WUS outside the active time, the network device sends the PDCCH to the terminal device when determining that there is the PDCCH sending requirement after a fourth duration starting from a moment at which the LP-WUS is sent. The third duration is the same as or different from the fourth duration. Therefore, specific behavior of the network device sending the LP-WUS and a method for sending the PDCCH if C-DRX is configured for the terminal device can be determined.

In a possible design, after sending the LP-WUS to the terminal device, the network device determines not to send the LP-WUS to the terminal device and starts a first timer, where the active time includes running time of the first timer. In this way, after the network device sends the LP-WUS, the terminal device can be immediately in the active time, thereby reducing a delay in monitoring the PDCCH by the terminal device.

In a possible design, the network device sends, within the running time of the first timer within the active time, the PDCCH to the terminal device when determining that there is the PDCCH sending requirement. In this way, after the network device sends the LP-WUS, the terminal device can immediately start to monitor the PDCCH, thereby reducing a delay in monitoring the PDCCH by the terminal device.

In a possible design, after sending the LP-WUS to the terminal device, the network device does not send the LP-WUS to the terminal device, and sends, from the active time closest to a moment at which the network device sends the LP-WUS, the PDCCH to the terminal device when there is the PDCCH sending requirement. In this way, no additional timer needs to be introduced, and complexity of implementing PDCCH sending is low.

In a possible design, the terminal device is configured to monitor downlink control information scrambled by a power saving radio network temporary identifier DCP. When determining that there is the LP-WUS sending requirement, the network device does not send the DCP to the terminal device when sending the LP-WUS to the terminal device. Therefore, specific behavior of the network device sending the LP-WUS if DCP is configured for the terminal device can be determined.

In a possible design, if the network device does not send the DCP on a sending occasion of the DCP, the network device determines not to start a DRX ON duration timer. Therefore, specific behavior of the network device sending the LP-WUS if DCP is configured for the terminal device can be determined. In addition, when monitoring the LP-WUS, the terminal device may not monitor the DCP, which helps reduce power consumption of the terminal device.

In a possible design, when determining that there is the LP-WUS sending requirement, the network device does not send PDCCH monitoring adaptation indication information to the terminal device when sending the LP-WUS to the terminal device, where the PDCCH monitoring adaptation indication information indicates at least one of PDCCH skipping or search space set group switching. Therefore, specific behavior of the network device sending the LP-WUS if the PDCCH monitoring adaptation indication information is configured for the terminal device can be determined. In addition, when monitoring the LP-WUS, the terminal device does not monitor the PDCCH monitoring adaptation indication information, which helps reduce power consumption of the terminal device.

In a possible design, the LP-WUS is for waking up the terminal device, and a method may be as follows: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device. Therefore, the terminal device can be flexibly woken up based on the LP-WUS in a plurality of manners.

In a possible design, after the network device sends the LP-WUS to the terminal device, the network device sends the PDCCH to the terminal device when there is the PDCCH sending requirement in a fifth duration; and if the network device determines that the PDCCH is not sent to the terminal device in the fifth duration, the network device sends the LP-WUS to the terminal device when there is the LP-WUS sending requirement, where the fifth duration is included in the LP-WUS, or the fifth duration is included in configuration information of the LP-WUS. In this way, a delay in monitoring the LP-WUS by the terminal device can be reduced based on the fifth duration. In addition, scheduling time of the network device can be restricted, so that the terminal device does not turn on, for a long time, a main circuit to monitor the PDCCH, thereby helping the terminal device save energy.

In a possible design, when the network device has the LP-WUS sending requirement within the active time, before sending the LP-WUS to the terminal device, the network device sends the configuration information of the LP-WUS to the terminal device. In this way, the terminal device can accurately obtain a related configuration of the LP-WUS.

In a possible design, the LP-WUS uses on off keying OOK modulation, frequency shift keying FSK modulation, or a modulation scheme combining OOK and FSK. Therefore, power consumption of a wake up circuit of the terminal device can be reduced.

According to a fifth aspect, this application further provides a communication apparatus. The communication apparatus may be a terminal device, and the communication apparatus has a function of implementing the method according to the first aspect or the possible designs of the first aspect or the method according to the third aspect or the possible designs of the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the first aspect or the possible designs of the first aspect, or the third aspect or the possible designs of the third aspect. For details, refer to detailed descriptions in the method examples. Details are not described herein again.

In a possible design, a structure of the communication apparatus includes a transceiver and a processor, and optionally further includes a memory. The transceiver is configured to: receive and send a signal, and is configured to: communicate and interact with another device in a communication system. The processor is configured to support the communication apparatus in performing a corresponding function in the first aspect or the possible designs of the first aspect, or the third aspect or the possible designs of the third aspect. The memory is coupled to the processor, and the memory stores program instructions and data that are necessary for the communication apparatus.

According to a sixth aspect, this application further provides a communication apparatus. The communication apparatus may be a network device, and the communication apparatus has a function of implementing the method according to the second aspect or the possible designs of the second aspect or the method according to the fourth aspect or the possible designs of the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the second aspect or the possible designs of the second aspect, or the fourth aspect or the possible designs of the fourth aspect. For details, refer to detailed descriptions in the method examples. Details are not described herein again.

In a possible design, a structure of the communication apparatus includes a transceiver and a processor, and optionally further includes a memory. The transceiver is configured to: receive and send a signal, and is configured to: communicate and interact with another device in a communication system. The processor is configured to support the communication apparatus in performing a corresponding function in the second aspect or the possible designs of the second aspect, or the fourth aspect or the possible designs of the fourth aspect. The memory is coupled to the processor, and the memory stores program instructions and data that are necessary for the communication apparatus.

According to a seventh aspect, an embodiment of this application provides a communication system, and the communication system may include the terminal device, the network device, and the like mentioned above.

According to an eighth aspect, an embodiment of this application provides a computer-readable storage medium. The computer-readable storage medium stores program instructions. When the program instructions are run on a computer, the computer is caused to perform the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including computer program code or instructions. When the computer program code or the instructions are run on a computer, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is performed.

According to a tenth aspect, this application further provides a chip, including a processor. The processor is coupled to a memory, and is configured to read and execute program instructions stored in the memory, so that the chip implements the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

For each aspect in the fifth aspect to the tenth aspect and technical effects that may be achieved in each aspect, refer to descriptions of technical effects that may be achieved in any one of the first aspect or the possible solutions of the first aspect, any one of the second aspect or the possible solutions of the second aspect, any one of the third aspect or the possible solutions of the third aspect, or any one of the fourth aspect or the possible solutions of the fourth aspect. Details are not described herein again.

### BRIEF DESCRIPTION OF DRAWINGS

FIG. 1 is a diagram of an architecture of a communication system according to this application;
FIG. 2 is a diagram of receiving a wake up signal by a terminal device by using a wake up circuit according to this application;
FIG. 3 is a diagram of a waveform of a signal according to this application;
FIG. 4 is a diagram of a waveform of an FSK signal whose information is 0101 according to this application;
FIG. 5 is a diagram of a DRX cycle according to this application;
FIG. 6 is a diagram of DCP indication meanings according to this application;
FIG. 7 is a diagram of PDCCH monitoring skipping according to this application;
FIG. 8 is a diagram of search space set switching according to this application;
FIG. 9 is a flowchart of a communication method according to this application;
FIG. 10 is a diagram of a possible time domain location for sending an LP-WUS according to this application;
FIG. 11 is a diagram of a first delay according to this application;
FIG. 12 is a diagram of monitoring a PDCCH by a terminal device according to this application;
FIG. 13 is a flowchart of another communication method according to this application;
FIG. 14 is a diagram of a structure of a communication apparatus according to this application; and
FIG. 15 is a diagram of a structure of a communication apparatus according to this application.

### DESCRIPTION OF EMBODIMENTS

The following further describes in detail this application with reference to accompanying drawings.

Embodiments of this application provide a communication method and apparatus, to provide an LP-WUS monitoring solution. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.

To describe the technical solutions in embodiments of this application more clearly, the following describes a communication method and apparatus provided in embodiments of this application in detail with reference to the accompanying drawings.

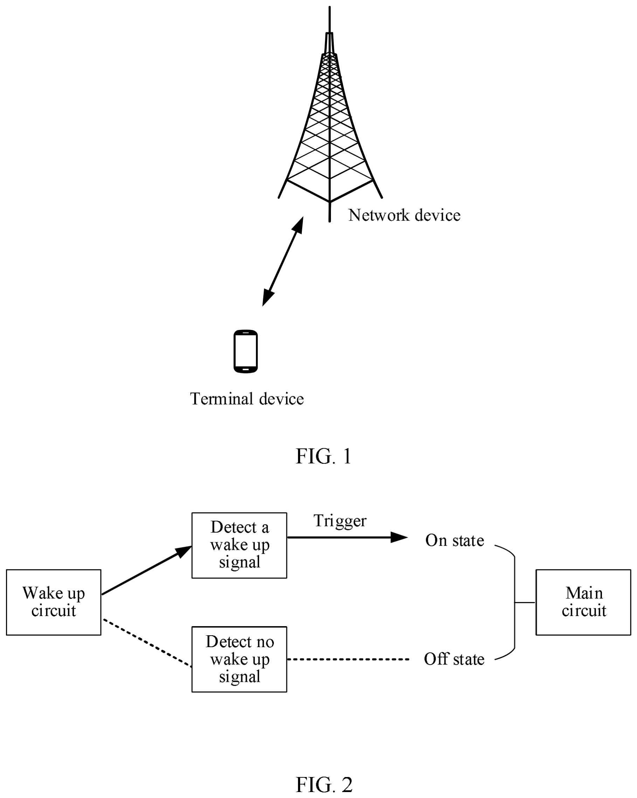

FIG. 1 shows an architecture of a communication system according to an embodiment of this application. The architecture of the communication system includes a network device and a terminal device.

The network device may be a device that has wireless transceiver functions or a chip that can be disposed in the network device. The network device includes but is not limited to a gNB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like. The network device may alternatively be a network node that constitutes a gNB or a transmission point, for example, a baseband unit (BBU), or a distributed unit (distributed unit, DU).

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a medium access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited.

The terminal device may also be referred to user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with wireless transceiver functions, a virtual reality (virtual reality, VR) terminal device, an augmented reality (augmented reality, AR) terminal device, a wireless terminal in industrial control (industrial control), a wireless terminal in autonomous driving (autonomous driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, or a smart headset), a wireless terminal in a smart home (smart home), or the like. The terminal device may alternatively be a chip, a chip module (or a chip system), or the like that can be disposed in the foregoing device. An application scenario is not limited in embodiments of this application. A terminal device with transceiver functions and a chip that can be disposed in the terminal device are collectively referred to as the terminal device in this application.

In this application, the network device may send a wake up signal to the terminal device, and the terminal device may receive the wake up signal by using a wake up receiver (wakeup receiver).

It should be noted that the communication system shown in FIG. 1 may be but is not limited to a 4th generation (4th Generation, 4G) system or a 5th generation (5th Generation, 5G) system, for example, a new radio access technology (new radio access technology, NR). Optionally, the method in embodiments of this application is further applicable to various future communication systems, for example, a 6th generation (6th Generation, 6G) system or another communication network.

It should be noted that a quantity and types of devices shown in the communication system shown in FIG. 1 are merely examples. There may be more devices in the communication system, for example, a core network device, which is not shown in FIG. 1.

For ease of understanding, the following first explains some technical terms in embodiments of this application.

### 1. Wake up link

Usually, a terminal device receives any downlink signal from a network device by using a same receiving module (or receiver, or receiver circuit). In this application, for ease of description, a module that completes these functions (or performs related steps) is referred to as a main circuit (or a main receiver). It may be understood that the main circuit is merely named for differentiation, and a specific name of the main circuit does not limit the protection scope of this application. For example, without loss of generality, the main circuit may also be described as a second circuit (or a second module). The main circuit is uniformly used for description below.

A signal received by the terminal device by using the main circuit may be referred to as being transmitted on a main link. The main link represents a connection relationship between the terminal device and the network device, and is a logical concept rather than a physical entity. It may be understood that the main link is merely named for differentiation, and a specific name of the main link does not limit the protection scope of this application. For example, without loss of generality, the main link may also be described as a second link.

When the terminal device receives a downlink signal by using the main circuit, power consumption is high. For example, when receiving downlink data, the terminal device first needs to receive a downlink signal by using a receiving module of the main circuit. Then the terminal device further needs to perform blind detection on a physical downlink control channel (physical downlink control channel, PDCCH), decode a received physical downlink shared channel (physical downlink shared channel, PDSCH), and the like. All these cause high power consumption. In addition, because the main circuit is complex, reference power consumption (or static power consumption) generated during running of the main circuit is high.

To reduce power consumption of receiving a downlink signal by the terminal device, a possible method is as follows: The terminal device may receive a wake up signal (wake up signal, WUS), or referred to as a low power wake up signal (low power wake up signal, LP-WUS), by using a separate low power simplified circuit. For example, the wake up signal indicates paging-related information, and the paging-related information may include, for example, whether a terminal device or a group of terminal devices is paged. For another example, the wake up signal indicates scheduling-related information, and the scheduling-related information may include, for example, whether a physical downlink control channel (physical downlink control channel, PDCCH) needs to be monitored. The low power simplified circuit may be implemented by a separate simplified circuit with a simple structure or a chip, and has low power consumption.

It should be understood that, for example, the low power simplified circuit may be referred to as a wake up receiver (wake up receiver, WUR), may be referred to as a wake up circuit, or may be referred to as a low power circuit, a low power wake up radio (low power wake up radio, LP-WUR), or the like. A name of the low power simplified circuit is not limited in this application. In this application, for ease of description, the low power simplified circuit is referred to as a wake up circuit. It may be understood that the wake up circuit is merely named for differentiation, and a specific name of the wake up circuit does not limit the protection scope of this application. For example, without loss of generality, the wake up circuit may also be described as a first circuit (or a first module). For ease of description, the wake up circuit is uniformly used for description below.

For example, FIG. 2 is a diagram of receiving a wake up signal by a terminal device by using a wake up circuit.

Similarly, a signal received by the terminal device by using the wake up circuit may be referred to as being transmitted on a wake up link. The wake up link represents a connection relationship between the terminal device and a network device, and is a logical concept rather than a physical entity. It may be understood that the wake up link is merely named for differentiation, and a specific name of the wake up link does not limit the protection scope of this application. For example, without loss of generality, the wake up link (or referred to as a WUR link) may also be described as a first link. A signal received by the terminal device on the wake up link may be referred to as a wake up signal. It should be further understood that the wake up signal is merely an example name, and a name of the wake up radio is not limited in this application.

When the terminal device is in an IDLE/INACTIVE state, the wake up signal may be for carrying the paging-related information mentioned above. When the terminal device is in a connected (CONNECTED) state, the wake up signal may be for carrying the scheduling-related information mentioned above. For example, the wake up signal indicates whether the terminal device needs to turn on the main circuit to receive scheduling information (for example, whether a PDCCH needs to be monitored).

### 2. On off keying (on off keying, OOK) modulation

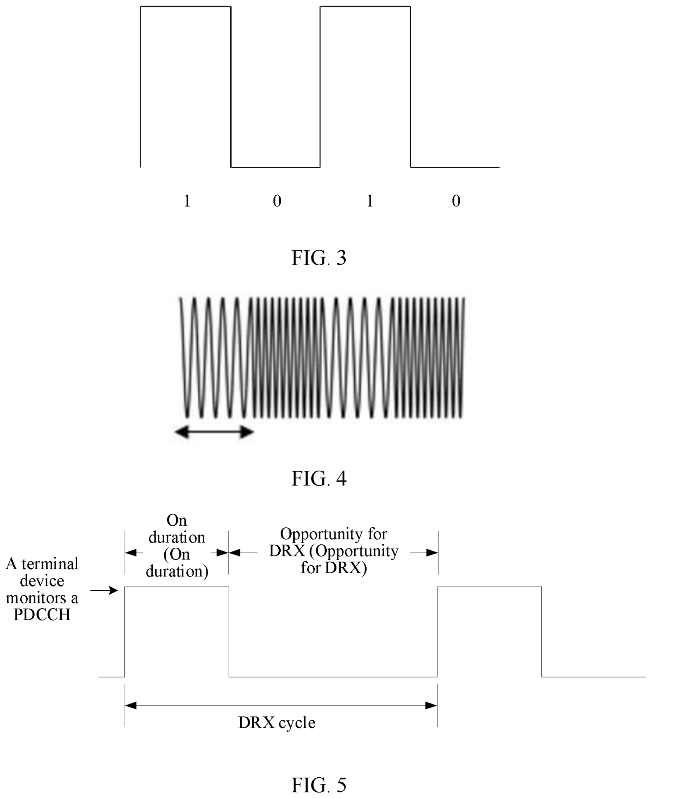

To reduce power consumption of the wake up circuit, the LP-WUS signal may be modulated using OOK, and a corresponding wake up circuit may receive the wake up signal by using an envelope detection method. When modulation is performed using OOK, each (encoded) bit corresponds to one symbol (symbol, which may also be referred to as a chip (chip)). When the bit is 1, a signal is sent in a length of the symbol (that is, signal power in the length of the symbol is not 0). For convenience, the signal may be referred to as an ON signal. When the bit is 0, no signal is sent in a length of the symbol (that is, signal power in the length of the symbol is 0). For convenience, the signal may be referred to as an OFF signal. A waveform shown in FIG. 3 represents four bits 1010. It should be understood that, there may be a reverse case. To be specific, when the bit is 0, a signal is sent in the length of the symbol (that is, the signal power is not 0 in the length of the symbol); and when the bit is 1, no signal is sent in the length of the symbol (that is, the signal power is 0 in the length of the symbol). This is not limited in this application.

A 5G NR system uses OFDM modulation, and a network device in the 5G NR system may send an orthogonal frequency division multiplexing (orthogonal frequency division multiplexing, OFDM) modulation signal. To be compatible with the 5G NR system as much as possible, the OOK signal may be implemented by using a transmitter that performs OFDM modulation. In a possible case, a length of an OOK symbol may be the same as a length of an OFDM symbol. In this case, when an ON signal of one symbol length needs to be sent, the transmitter sends a specific signal, so that a contour of the signal in the symbol length is as a square wave as possible. The transmitter is turned off for time being the length of one symbol when an OFF signal needs to be sent. In another possible case, an OFDM transmitter may send a plurality of OOK symbols in a length of one OFDM symbol, to shorten a length of the OOK symbol. More OOK symbols may be sent in same time, thereby improving a data rate.

### 3. Frequency shift keying (frequency shift keying, FSK) modulation

The LP-WUS may also be modulated using FSK. When FSK modulation is used, different frequency resources are used for different information. For example, 2FSK may carry 1-bit (bit) information. When an information bit is 0, the information may be sent on a frequency resource f0, and no information is sent on a frequency resource f1. When the information bit is 1, the information may be sent on the frequency resource f1, and no information is sent on the frequency resource f0. It is assumed that f0<f1, and a waveform of an FSK signal whose information is 0101 may be shown in FIG. 4. In the 1^{st} symbol and the 3^{rd} symbol, a frequency of the signal is low, and in the 2^{nd} symbol and the 4^{th} symbol, a frequency of the signal is high. When demodulating the signal, a receiving end may compare power on f0 and f1 to determine whether sent information is 0 or 1.

FSK can further support a higher modulation order to carry more information. For example, 4FSK may carry 2-bit information. When information bits are 00, the information may be sent on a frequency resource f0, and no information is sent on frequency resources f1, f2, and f3. When the information bits are 01, the information may be sent on the frequency resource f1, and no information is sent on the frequency resources f0, f2, and f3. When the information bits are 10, the information may be sent on the frequency resource f2, and no information is sent on the frequency resources f0, f1, and f3. When the information bits are 11, the information may be sent on the frequency resource f3, and no information is sent on the frequency resources f0, f1, and f2. Similarly, the receiving end may compare power on a plurality of frequency resources to determine transmitted information.

### 4. Discontinuous reception (discontinuous reception, DRX)

A DRX mechanism may cause a terminal device to periodically sleep in some time periods, thereby reducing power consumption of the terminal device. DRX used by a terminal device in a radio resource control (radio resource control, RRC) connected state is connected discontinuous reception (connected discontinuous reception, C-DRX).

For example, as shown in FIG. 5, a DRX cycle (cycle) includes an "on duration (On Duration)" part and an "opportunity for DRX (Opportunity for DRX)" part. The terminal device monitors and receives a physical downlink control channel (physical downlink control channel, PDCCH) within time of "on duration", and the terminal device may not monitor or receive a PDCCH within time of "opportunity for DRX" to reduce power consumption.

The DRX mechanism includes an on-duration timer (onDurationTimer or drx-onDurationTimer), and the terminal device needs to start drx-onDurationTimer at the start of each DRX cycle (that is, at the start of on Duration of each DRX cycle). When drx-onDurationTimer expires, it indicates that the time of "on duration" ends. In this case, the terminal device enters the time of "opportunity for DRX". The DRX mechanism further includes an inactivity timer (InactivityTimer or drx-InactivityTimer). Each time the terminal device receives DCI for scheduling a newly transmitted data packet, the terminal device starts/restarts drx-InactivityTimer. Running time of drx-OnDurationTimer and running time of drx-InactivityTimer are both referred to as active time (Active Time). The terminal device monitors a PDCCH within the active time, receives a channel state information reference signal (channel state information reference signal, CSI-RS), performs channel state information (channel state information, CSI) feedback, and sends a sounding reference signal (sounding reference signal, SRS). The terminal device does not monitor a PDCCH outside the active time, does not perform periodical CSI feedback (periodical CSI feedback) or semi-persistent CSI feedback (semi-persistent CSI feedback), and does not send a periodical SRS (periodical SRS) or a semi-persistent SRS (semi-persistent SRS). A C-DRX cycle length (C-DRX cycle length), a drx-OnDurationTimer length, and a drx-InactivityTimer length are all configured by a network device for the terminal device.

### 5. Downlink control information scrambled by a power saving radio network temporary identifier (DCI with cyclic redundancy check scrambled by power saving radio network temporary identifier, DCP)

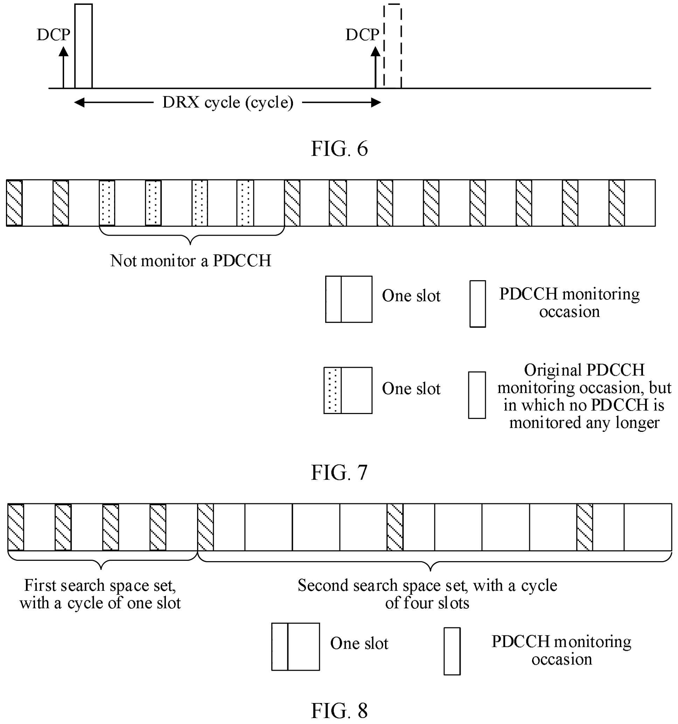

In an NR Rel-16 standard, DCI format 2_6 (DCI format 2_6) is supported, and is also referred to as DCP (for brevity of description, the DCP used as a name below). The DCP may be located before OnDuration of a C-DRX cycle, and indicates whether OnDurationTimer of the C-DRX cycle associated with the DCP needs to be started. If the DCP indicates that OnDurationTimer needs to be started (a value of an indication bit associated with the terminal device in the DCP is 1), to be specific, the terminal device needs to monitor a PDCCH in OnDuration of the DRX cycle (in other words, the terminal device is in a wake up state). It also means that data scheduling for the terminal device may exist in OnDuration. As shown in FIG. 6, a solid-line box in FIG. 6 represents OnDuration in which the terminal device is in the wake up state. If the DCP indicates that OnDurationTimer does not need to be started (a value of an indication bit associated with the terminal device in the DCP is 0), to be specific, the terminal device needs not to monitor a PDCCH in the DRX cycle (in other words, the terminal device is in a sleep state). It also means that data scheduling for the terminal device does not exist in OnDuration. As shown in FIG. 6, a dashed-line box in FIG. 6 represents OnDuration in which the terminal device is in the sleep state.

A physical layer (physical, PHY) of the terminal device decodes the DCP, and notifies a medium access control (media access control, MAC) layer of the terminal device of the information (0 or 1) indicated by the DCP, to control whether to start OnDurationTimer.

### 6. PDCCH skipping (PDCCH skipping) and search space set group switching ((search space set group, SSSG) switching)

A basic principle of PDCCH skipping is as follows: A network device sends a piece of indication information to a terminal device, to indicate that the terminal device may skip PDCCH monitoring in a period of time. That the terminal device skips PDCCH monitoring in the period of time may equivalently mean that the terminal device does not monitor the PDCCH in the period of time. FIG. 7 is a diagram of PDCCH monitoring skipping. A terminal device originally needs to monitor a PDCCH in each slot (slot). However, if the terminal device does not need to monitor the PDCCH for a period of time as indicated by a network device, the terminal device may not monitor the PDCCH in the indicated period of time.

A basic principle of SSSG switching is as follows: A network device may send a piece of indication information to a terminal device, to indicate the terminal device to switch between two groups of preconfigured search space sets. As shown in FIG. 8, two search space sets are configured for a terminal device, a cycle corresponding to a first search space set is one slot, and a cycle corresponding to a second search space set is four slots. After a network device sends indication information to the terminal device, to indicate that the terminal device may switch from monitoring the first search space set to monitoring the second search space set, the terminal device may switch from monitoring the first search space set to monitoring the second search space set.

In a current standard, indication information of PDCCH skipping and indication information of SSSG switching are carried in a same field (that is, a same field) of downlink control information (downlink control information, DCI). This field may be referred to as a PDCCH monitoring adaptation (PDCCH monitoring adaptation) field or referred to as PDCCH monitoring adaptation indication information. A DCI format (format) carrying the field may be DCI format 0_1 or DCI format 0_2 for scheduling physical uplink shared channel (physical uplink shared channel, PUSCH) transmission, or may be DCI format 1_1 or DCI format 1_2 for scheduling physical downlink shared channel (physical downlink shared channel, PDSCH) transmission.

Currently, it is proposed that when a terminal device is in a connected state, PDCCH monitoring may be indicated by an LP-WUS, and energy saving of the terminal device is implemented by monitoring the LP-WUS. However, currently, how the terminal device monitors the LP-WUS is not specified. For example, a related procedure of activating or deactivating LP-WUS monitoring (that is, how to start or stop LP-WUS monitoring) is not specified. For another example, specific behavior of monitoring the LP-WUS by the terminal device is not specified. Based on this, embodiments of this application provide a communication method, to provide a solution to monitoring an LP-WUS by a terminal device.

In the following embodiments, the communication method provided in embodiments of this application is described in detail by using a network device and a terminal device as an example. It should be understood that an operation performed by the network device may alternatively be implemented by a processor, a chip, a chip system, a functional module, or the like in the network device, and an operation performed by the terminal device may alternatively be implemented by a processor, a chip, a chip system, a functional module, or the like in the terminal device. This is not limited in this application.

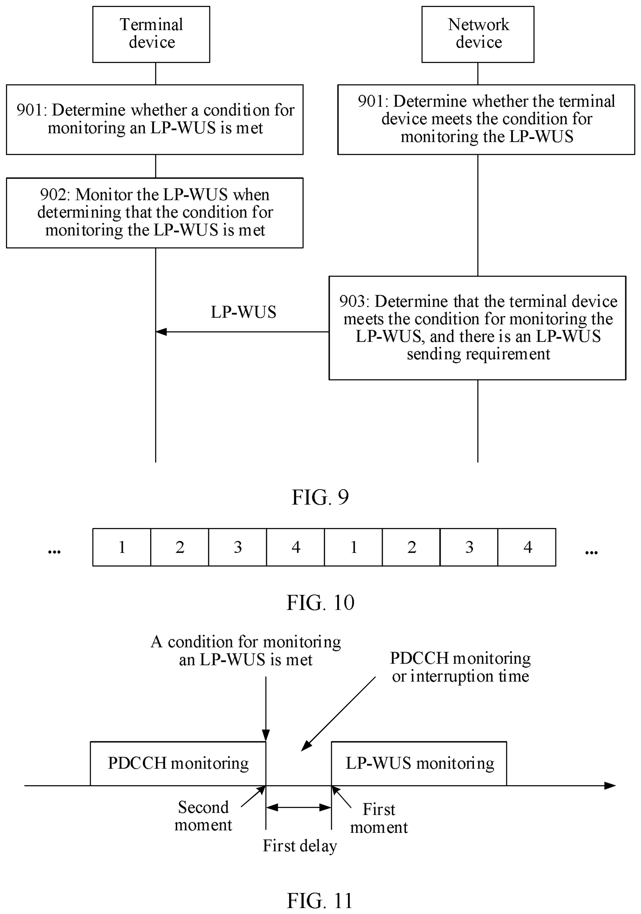

Based on the foregoing descriptions, an embodiment of this application provides a communication method, to provide a solution to activating a related procedure of monitoring an LP-WUS by a terminal device. As shown in FIG. 9, a procedure of the method may include the following steps.

Step 901: A terminal device determines whether a condition for monitoring an LP-WUS is met; and correspondingly, a network device determines whether the terminal device meets the condition for monitoring the LP-WUS. The LP-WUS is for waking up the terminal device.

Monitoring the LP-WUS herein may be understood as starting to monitor the LP-WUS.

Waking up the terminal device herein may indicate that the terminal device starts to monitor a PDCCH, where the PDCCH is for scheduling PDSCH or PUSCH transmission, or the PDCCH is for activating semi-persistent scheduling (semi-persistent scheduling, SPS) or configured grant (configured grant, CG). Optionally, PDSCH transmission may be dynamic PDSCH transmission, or may be semi-persistent PDSCH transmission.

In an optional implementation, the LP-WUS may wake up the terminal device in the following manners.

Manner a1: The LP-WUS may include an identifier of the terminal device, and the identifier of the terminal device is for waking up the terminal device.

For example, when the terminal device is in a connected state, the identifier of the terminal device may be a connected radio network temporary identifier (connected radio network temporary identifier, C-RNTI), may be a dedicated RNTI related to LP-WUS monitoring, or may be an identifier in another form. This is not limited herein.

Manner a2: The LP-WUS includes partial information of an identifier of the terminal device, the partial information of the identifier of the terminal device and a first time domain location occupied by the LP-WUS are for waking up the terminal device, and the first time domain location is related to the identifier of the terminal device.

That the first time domain location is related to the identifier of the terminal device may be understood as that the first time domain location is related to the entire identifier of the terminal device, or may be understood as that the first time domain location is related to the partial information of the identifier of the terminal device. This is not limited in this application.

Optionally, when the terminal device monitors the LP-WUS not at all time domain locations but at some time domain locations, the time domain locations may be for representing the partial information of the identifier of the terminal device. For example, as shown in FIG. 10, when all time domain locations at which the LP-WUS may be sent are divided into N=4 portions, each portion of time domain locations appears periodically, and a terminal device needs to monitor only one portion of time domain locations. The terminal device may perform a modulo operation on N based on an identifier of the terminal device, to determine a portion of time domain locations that the terminal device needs to monitor. For example, in this case, if the identifier of the terminal device is a C-RNTI that includes 16 bits, the LP-WUS may include only 14 most significant bits (that is, partial information of the identifier of the terminal device), and two least significant bits may be distinguished by using different time domain locations. For example, the two least significant bits of the terminal device may be identified by using the first time domain location, so that the terminal device can be woken up based on the 14 most significant bits included in the LP-WUS and the first time domain location.

In a possible case, if the time domain locations are divided into more portions, it is possible that the entire identifier of the terminal device is distinguished by using the time domain locations. In this case, the LP-WUS may not include the partial information of the identifier of the terminal device.

Manner a3: The LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group. The terminal device group includes the terminal device.

That the second time domain location is related to the identifier of the terminal device group may be understood as that the second time domain location is related to the entire identifier of the terminal device group, or may be understood as that the second time domain location is related to the partial information of the identifier of the terminal device group. This is not limited in this application.

For example, still as shown in FIG. 10, when all time domain locations at which the LP-WUS may be sent are divided into N=4 portions, each portion of time domain locations appears periodically, and a terminal device group needs to monitor only one portion of time domain locations. The terminal device group may perform a modulo operation on N based on an identifier of the terminal device group, to determine a portion of time domain locations that the terminal device needs to monitor. For example, in this case, if the identifier of the terminal device group includes 16 bits, the LP-WUS may include only 14 most significant bits (that is, partial information of the identifier of the terminal device group), and two least significant bits may be distinguished by using different time domain locations. For example, the two least significant bits of the terminal device group may be identified by using the second time domain location, so that the terminal device in the terminal device group can be woken up based on the 14 most significant bits included in the LP-WUS and the second time domain location.

In a possible case, if the time domain locations are divided into more portions, it is possible that the entire identifier of the terminal device group is distinguished by using the time domain locations. In this case, the LP-WUS may not include the partial information of the identifier of the terminal device group.

Manner a4: The LP-WUS includes an identifier of a terminal device group, the identifier of the terminal device group is for waking up the terminal device group, and the terminal device group includes the terminal device.

Manner a5: The LP-WUS includes a plurality of bits, the plurality of bits correspond to a plurality of terminal devices, a first bit in the plurality of bits is for waking up the terminal device, and the plurality of terminal devices include the terminal device.

Which bit in the plurality of bits corresponds to the terminal device may be preconfigured.

In this manner a5, the LP-WUS may indicate identifiers of the plurality of terminal devices, and specifically, may indicate the identifiers of the plurality of terminal devices by using the plurality of bits. Optionally, the identifiers of the plurality of terminal devices may be indicated in a bitmap (bitmap) manner.

For example, the LP-WUS may include a 10-bit bitmap, where a bit value 1 indicates being woken up, and a bit value 0 indicates not being woken up. It is assumed that when the terminal device corresponds to the 3^{rd} bit in the 10 bits, if a value of the 3^{rd} bit is 1, the terminal device is woken up. In other words, the terminal device stops monitoring the LP-WUS and starts to monitor the PDCCH.

Optionally, the plurality of terminal devices may belong to one terminal device group. Correspondingly, terminal devices corresponding to one terminal device group are woken up by using a plurality of bits.

Optionally, by using the method in the method a5, the terminal device needs to first determine an LP-WUS corresponding to a terminal device group to which the terminal device belongs. For example, the terminal device may determine, with reference to the method in the foregoing manner a3 or a4 and based on the partial information of the identifier of the terminal device group or the identifier of the terminal device group included in the LP-WUS, the LP-WUS corresponding to the terminal device group to which the terminal device belongs. In other words, the foregoing manner a3 or a4 may be combined with the manner a5 to wake up some or all terminal devices in one terminal device group.

In a possible implementation, the LP-WUS is received by a first circuit of the terminal device, the PDCCH is received by a second circuit of the terminal device, and the first circuit is different from the second circuit. For details, refer to related descriptions of the first circuit and the second circuit in the foregoing descriptions. Details are not described herein again.

Step 902: The terminal device monitors the LP-WUS when determining that the condition for monitoring the LP-WUS is met.

It may be understood that the terminal device may monitor the LP-WUS after determining, for a time, that the condition for monitoring the LP-WUS is met. Optionally, when monitoring the LP-WUS after determining, for this time, that the condition for monitoring the LP-WUS is met, the terminal device may determine, for a plurality of times in a period of time, that the condition for monitoring the LP-WUS is met, and may monitor the LP-WUS when determining, for the plurality of times in the period of time, that the condition for monitoring the LP-WUS is met.

Step 903: If determining that the terminal device meets the condition for monitoring the LP-WUS, the network device sends the LP-WUS to the terminal device when there is an LP-WUS sending requirement.

In this application, that the network device sends the LP-WUS to the terminal device when there is the LP-WUS sending requirement may be understood as that the network device determines that the terminal device monitors the LP-WUS, or may be understood as that the network device may send the LP-WUS. Other similar descriptions may be understood similarly, and are not described one by one below.

Optionally, before the terminal device monitors the LP-WUS, the terminal device receives configuration information of the LP-WUS from the network device. For example, the configuration information of the LP-WUS may include one or more of the following: a monitoring time-frequency domain location of the LP-WUS, a format of the LP-WUS, a modulation scheme of the LP-WUS, information content carried in the LP-WUS, or the like. Optionally, the information content carried in the LP-WUS may be a PDCCH monitoring indication, or the like.

Certainly, the format of the LP-WUS, the modulation scheme of the LP-WUS, the information content carried in the LP-WUS, or the like may also be predefined in a protocol. This is not limited in this application.

The LP-WUS may use OOK modulation, FSK modulation, or a modulation scheme combining OOK and FSK.

For example, the configuration information of the LP-WUS may be sent by the network device to the terminal device in an RRC message. The terminal device may receive the RRC message by using a main circuit.

Optionally, after the terminal device receives the configuration information of the LP-WUS, the terminal device does not immediately start to monitor the LP-WUS. Instead, the terminal device determines that the condition for monitoring the LP-WUS is met, and the terminal device starts to monitor the LP-WUS.

In an optional implementation, the terminal device may determine, by using the following methods, that the condition for monitoring the LP-WUS is met:

Method b1: The terminal device receives first information from the network device, where the first information indicates the terminal device to monitor the LP-WUS. That is, the first information activates LP-WUS monitoring.

For example, the network device may send the first information to the terminal device by using DCI, a medium access control control element (media access control control element, MAC CE), or the like.

Method b2: The terminal device determines that scheduling information is not received from the network device in a first duration.

Optionally, the first duration may be implemented based on a timer (timer). To be specific, a duration of the timer is set to the first duration. After the timer expires, the terminal device starts to monitor the LP-WUS.

The timer may be a currently existing timer, or may be a newly defined timer dedicated to triggering start of LP-WUS monitoring. This is not limited in this application. For example, when C-DRX is configured for the terminal device, the timer may be drx-InactivityTimer. In other words, after drx-InactivityTimer expires, the terminal device starts to monitor the LP-WUS.

Optionally, based on the foregoing method b1 or b2, the terminal device may further determine, based on the following method b3, that the condition for monitoring the LP-WUS is met.

Method b3: The terminal device determines that a first channel quality parameter is greater than or equal to a first threshold, where the first channel quality parameter is at least one of the following: reference signal received power (reference signal received power, RSRP), reference signal received quality (reference signal received quality, RSRQ), an LP-WUS detection probability, or a low-power synchronization signal (low-power synchronization signal, LP-SS) detection probability.

Optionally, the first channel quality parameter may correspond to a main link, to be specific, a link between the network device and the main circuit of the terminal device.

For example, the terminal device may send first channel feedback information to the network device, where the first channel feedback information indicates that the first channel quality parameter is greater than or equal to the first threshold. In this way, the network device determines that the terminal device meets the condition for monitoring the LP-WUS.

Correspondingly, the network device may send the LP-WUS to the terminal device only when determining that the terminal device meets the condition for monitoring the LP-WUS, to keep aligned with LP-WUS monitoring performed by the terminal device.

The network device may determine, by using the following methods, that the terminal device meets the condition for monitoring the LP-WUS.

Method c1: The network device sends the first information to the terminal device.

Method c2: The network device determines that the scheduling information is not sent to the terminal device in the first duration.

Optionally, similar to the terminal device, based on the foregoing method c1 or c2, the network device may further determine, based on the following method c3, that the condition for monitoring the LP-WUS is met.

Method c3: The network device receives the first channel feedback information from the terminal device.

It should be understood that the method b1 corresponds to the method c1, the method b2 corresponds to the method c2, and the method b3 corresponds to the method c3. For example, when the terminal device determines, by using the method b1, that the condition for monitoring the LP-WUS is met, the network device correspondingly determines, by using the method c1, that the terminal device meets the condition for monitoring the LP-WUS. For another example, when the terminal device determines, jointly by using the method b2 and the method b3, that the condition for monitoring the LP-WUS is met, the network device correspondingly determines, jointly by using the method c2 and the method c3, that the terminal device meets the condition for monitoring the LP-WUS.

In an optional implementation, the terminal device starts to monitor the LP-WUS at a first moment. Correspondingly, the network device sends the LP-WUS to the terminal device from the first moment and when there is the LP-WUS sending requirement.

Optionally, the first moment is related to a second moment, and the second moment may be a moment at which the terminal device receives the first information. This may be understood as that the second moment is a moment at which the network device sends the first information, or the second moment may be an end moment of the first duration.

The first information may be included in a signal (for example, the DCI or the MAC CE mentioned above). Based on this, the moment at which the terminal device receives the first information or the moment at which the network device sends the first information may be understood as an end moment of transmission of the signal including the first information, or may be described as a moment at which transmission of the signal including the first information is completed.

In an example, the first moment may be a moment of the second moment plus a first delay, and the first delay may be understood as an application delay (application delay) of LP-WUS monitoring.

The first delay may include time (which, for example, may be between 1 millisecond (ms) and 10 ms) for turning on a wake up circuit. Optionally, if the first information activates the terminal device to monitor the LP-WUS, the first delay may further include time for decoding the first information by the main circuit of the terminal device, or may be understood as including time for decoding the signal including the first information by the main circuit of the terminal device. This is not limited in this application.

Optionally, within the first delay, the terminal device may continue monitoring the PDCCH, or the terminal device may not monitor anything (for example, the terminal device neither monitors the PDCCH nor monitors the LP-WUS, or the terminal device may not receive another signal such as a CSI-RS). When the terminal device does not monitor anything, the first delay may be referred to as interruption (interruption) time.

For example, FIG. 11 is a diagram of an example of the first delay.

A value of the first delay may be predefined in a protocol, may be reported by the terminal device to the network device, may be negotiated by the terminal device and the network device, or may be configured by the network device for the terminal device. This is not limited in this application.

In another example, the first moment may be a start moment of a next time unit of the second moment, or the like. Optionally, the time unit may be a slot, a symbol, or the like.

According to the foregoing method, when the terminal device starts to monitor the WUS can be determined, and the network device knows when to send the WUS to the terminal device.

In an optional implementation, when the terminal device monitors the LP-WUS, the terminal device determines whether a condition for monitoring the PDCCH is met; and monitors the PDCCH when determining that the condition for monitoring the PDCCH is met. Correspondingly, after determining that the terminal device meets the condition for monitoring the LP-WUS, the network device determines whether the terminal device meets the condition for monitoring the PDCCH; and if determining that the terminal device meets the condition for monitoring the PDCCH, sends the PDCCH to the terminal device when there is a PDCCH sending requirement.

In this application, that the network device sends the PDCCH to the terminal device when there is the PDCCH sending requirement may be understood as that the network device determines that the terminal device monitors the PDCCH, or may be understood as that the network device may send the PDCCH. Other similar descriptions may be understood similarly, and are not described one by one below.

The terminal device may determine, by determining that a first condition and/or a second condition are/is met, that the condition for monitoring the PDCCH is met. The first condition may include the following conditions:
Condition d1: The terminal device detects the LP-WUS from the network device.

Because the LP-WUS may indicate whether to monitor the PDCCH, after detecting the LP-WUS, the terminal device may determine that the terminal device may start to monitor the PDCCH.

Optionally, the LP-WUS may indicate the terminal device to stop monitoring the LP-WUS, that is, indicate the terminal device to monitor the PDCCH. For example, when the LP-WUS indicates the terminal device to stop monitoring the LP-WUS, a method may be similar to a method for waking up the terminal device by the LP-WUS. For details, refer to the foregoing related descriptions. Details are not described herein again.

Condition d2: The terminal device sends uplink service information.

For example, the uplink service information may be a scheduling request (scheduling request), a configured grant PUSCH (configured grant PUSCH), or the like.

For example, the terminal device requests, by using an SR, the network device to send uplink scheduling. After sending the SR, the terminal device monitors the PDCCH to determine whether there is uplink scheduling from the network device. Therefore, after sending the SR, the terminal device may start to monitor the PDCCH.

For another example, after the network device configures a CG-PUSCH resource for the terminal device, when there is an uplink service, the terminal device may directly send uplink data by using the preconfigured CG-PUSCH resource without waiting for scheduling by the network device. After the terminal device sends a CG-PUSCH, if the network device fails to correctly receive the CG-PUSCH, the network device may send DCI to schedule retransmission of the CG-PUSCH. Therefore, after sending the CG-PUSCH, the terminal device may start to monitor the PDCCH.

Condition d3: The terminal device does not detect the LP-WUS in a second duration.

Optionally, the second duration may be included in the configuration information of the LP-WUS, or may be included in the first information. This is not limited in this application. Because the LP-WUS uses a simple modulation scheme, power consumption of the wake up circuit for receiving the LP-WUS by the terminal device is low. Therefore, coverage performance of the LP-WUS may be poor. When the terminal device does not detect the LP-WUS in the second duration, link quality of a first link between the first circuit of the terminal device and the network device may be already poor. To avoid ineffectually monitoring the LP-WUS by the terminal device for a long time if the link quality of the first link is poor, the problem may be avoided by using the second duration.

The second condition may include:
Condition d4: The terminal device determines that a second channel quality parameter is less than or equal to a second threshold, where the second channel quality parameter is at least one of the following: RSRP, RSRQ, an LP-WUS detection probability, or an LP-SS detection probability.

Optionally, the second channel quality parameter may correspond to the main link (namely, the link between the network device and the main circuit of the terminal device), or may correspond to a WUR link (namely, a link between the network device and the wake up circuit of the terminal device).

The terminal device may determine the second channel quality parameter by using the following possible methods: In a possible method, the terminal device measures the second channel quality parameter by using the wake up circuit. In this case, the network device needs to send a reference signal (which may be a newly defined reference signal, for example, may be referred to as an LP-RS) that can be received by the wake up circuit, to complete measurement of the second channel quality parameter. In another possible method, the terminal device measures the second channel quality parameter by using the main circuit. In this case, the terminal device needs to irregularly (for example, periodically) turn on the main circuit to receive a reference signal (for example, a synchronization signal and physical broadcast channel block (synchronization signal and physical broadcast channel block, SSB) or a channel state information reference signal (channel state information reference signal, CSI-RS)), to complete measurement of the second channel quality parameter.

Optionally, the terminal device may send second channel feedback information to the network device, where the second channel feedback information indicates that the second channel quality parameter is less than or equal to the second threshold. In this way, the network device determines that the terminal device meets the condition for monitoring the PDCCH.

It may be understood that any one of the foregoing conditions d1, d2, or d3 may coexist with the condition d4, or the condition d1, d2, d3, or d4 may exist alone.

Correspondingly, the network device may determine, by determining that the first condition and/or the second condition are/is met, that the terminal device meets the condition for monitoring the PDCCH. The first condition may include the following conditions:
Condition e1: The network device sends the LP-WUS to the terminal device when there is the LP-WUS sending requirement.
Condition e2: The network device receives the uplink service information.
Condition e3: The network device does not send the LP-WUS in the second duration.

The second condition may include:
Condition e4: The network device receives the second channel feedback information from the terminal device.

It should be understood that the method d1 corresponds to the method e1, the method d2 corresponds to the method e2, the method d3 corresponds to the method e3, and the method d4 corresponds to the method e4. For example, when the terminal device determines, by using the method d1, that the condition for monitoring the PDCCH is met, the network device correspondingly determines, by using the method e1, that the terminal device meets the condition for monitoring the PDCCH. For another example, when the terminal device determines, jointly by using the method d2 and the method d3, that the condition for monitoring the PDCCH is met, the network device correspondingly determines, jointly by using the method e2 and the method e3, that the terminal device meets the condition for monitoring the PDCCH.

In a possible implementation, time when the terminal device stops monitoring the LP-WUS may be earlier than time when the terminal device starts to monitor the PDCCH, or may be later than time when the terminal device starts to monitor the PDCCH, or LP-WUS monitoring may stop while PDCCH monitoring starts. This is not limited in this application.

In a possible implementation, the terminal device does not stop monitoring the LP-WUS when monitoring the PDCCH.

In a possible implementation, the terminal device may start to monitor the PDCCH at a third moment. Correspondingly, the network device may send the PDCCH to the terminal device from the third moment and when there is the PDCCH sending requirement.

The third moment is related to a fourth moment, and the fourth moment may be a moment at which the terminal device detects the LP-WUS, a moment at which transmission of the uplink service information is completed, or an end moment of the second duration.

It should be noted that, because the LP-WUS has a specific length, in this application, the moment at which the LP-WUS is detected may be understood as a moment at which transmission of the LP-WUS is completed, or may be referred to as an end moment of the LP-WUS.

In a possible case, the third moment and the fourth moment may be a same moment. In other words, it may be understood as that the third moment and the fourth moment are a same concept. Alternatively, the third moment and the fourth moment are two different moment concepts, but values of the third moment and the fourth moment may be the same.

In still another possible case, the third moment may be a moment of the fourth moment plus a second delay, and the second delay may be understood as an application delay of PDCCH monitoring.

For example, in a connected state, when the terminal device monitors the LP-WUS by using the wake up circuit, to reduce power consumption, the main circuit should be in a sleep state. It is assumed that the main circuit is in a deep sleep (deep sleep) state. The second delay may be 20 ms, the second delay may range from 10 ms to 20 ms, or the second delay may have another value. This is not limited in this application.

A value of the second delay may be predefined in a protocol, may be reported by the terminal device to the network device, may be negotiated by the terminal device and the network device, or may be configured by the network device for the terminal device. This is not limited in this application.

Optionally, within the second delay, the terminal device may continue monitoring the LP-WUS, or the terminal device may not monitor anything (for example, the terminal device neither monitors the PDCCH nor monitors the LP-WUS, or the terminal device may not receive another signal such as an LP-SS). When the terminal device does not monitor anything, the first delay may be referred to as interruption (interruption) time.

In another possible case, the third moment may be a start moment of a next time unit of the fourth moment, or the like. Optionally, the time unit may be a slot, a symbol, or the like.

For example, if the fourth moment is the moment at which transmission of the uplink service information is completed, the terminal device sends the SR or the CG-PUSCH, indicating that the terminal device has started working by using the main circuit. In this case, there may be no need to perform another process of turning on the main circuit. Therefore, as defined, the terminal device may start to monitor the PDCCH from a next slot or symbol in which the SR or the CG-PUSCH is sent.

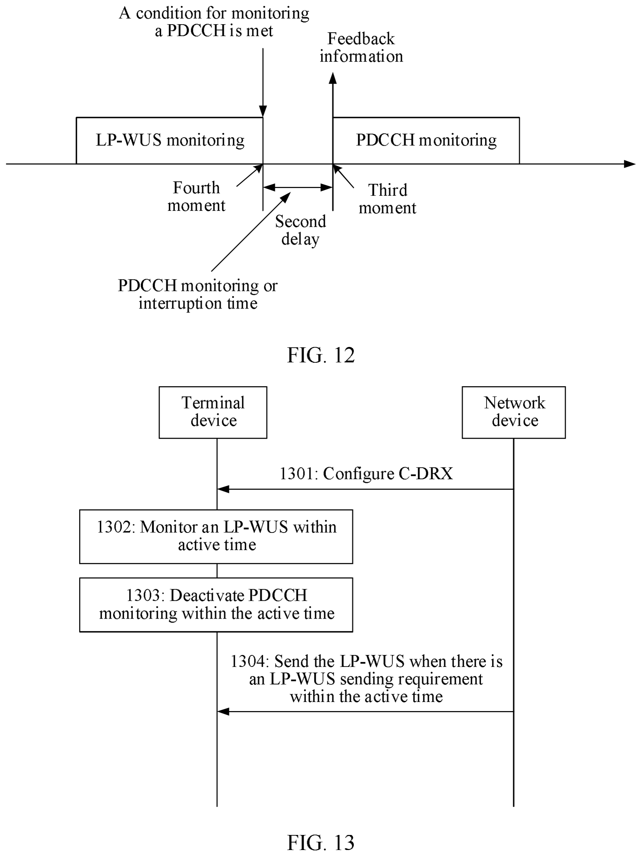

In another optional manner, to further ensure status alignment between the network device and the terminal device, the terminal device may send feedback information to the network device after the third moment, where the feedback information indicates that the terminal device does not monitor the LP-WUS or indicates that the terminal device starts to monitor the PDCCH. The terminal device starts to monitor the PDCCH after sending the feedback information. Correspondingly, after receiving the feedback information, the network device sends the PDCCH to the terminal device when there is the PDCCH sending requirement. For example, FIG. 12 is a diagram of monitoring the PDCCH by the terminal device. It should be noted that FIG. 12 merely shows an example in which the third moment is the moment of the fourth moment plus the second delay. This is merely an example herein, and other cases are not shown one by one. It may be understood that a diagram in which the terminal device starts to monitor the PDCCH at the third moment at which there is no feedback information in FIG. 12 is not separately shown herein.

Optionally, specific time when the terminal device sends the feedback information to the network device may be predefined. A resource for sending the feedback information by the terminal device may be configured by the network device, or may be indicated by the LP-WUS.

Optionally, the feedback information may be sent by using a periodical PUCCH resource. A time domain location of the PUCCH resource used for the feedback information may be determined based on the second delay. For example, the feedback information may be sent on a periodical PUCCH resource closest to the second delay; or when the LP-WUS indicates the terminal device to start to monitor the PDCCH, the LP-WUS also indicates a PUCCH resource that needs to be used.

According to the foregoing method, when the terminal device starts to monitor the PDCCH can be determined, and the network device knows when to send the PDCCH to the terminal device.

In an optional implementation, if C-DRX is configured for the terminal device, the terminal device does not monitor the PDCCH (and does not perform periodical/semi-persistent CSI measurement/feedback or send a periodical/semi-persistent SRS) when monitoring the LP-WUS within active time (Active Time).

Correspondingly, if determining that the terminal device monitors the LP-WUS, the network device does not send the PDCCH to the terminal device when sending the LP-WUS to the terminal device within the active time and when there is the LP-WUS sending requirement.

It may be understood that, when the terminal device monitors the LP-WUS, each C-DRX timer (timer) may run normally, and a definition of the active time is not changed. However, a priority of monitoring the LP-WUS by the terminal device is higher than that of another legacy (legacy behavior).

For example, the active time may include at least one of the following: time of at least one running timer in a DRX ON duration timer (namely, drx-onDurationTimer), a DRX inactivity timer (also referred to as a DRX inactivity timer, namely, drx-InactivityTimer), a DRX downlink retransmission timer, a DRX uplink retransmission timer, or a random access contention resolution timer; time within which a scheduling request has been sent on a PUCCH and the scheduling request is pending; after the terminal device successfully receives a random access response of a random access preamble, time within which a new transmission indicated by a PDCCH and addressed to a cell radio network temporary identifier C-RNTI of a medium access control (media access control, MAC) entity has not been received, where the random access preamble is not selected by the MAC entity from contention-based random access preambles.

In another optional implementation, when connected discontinuous reception C-DRX is configured for the terminal device, the terminal device may monitor the LP-WUS within the active time or outside the active time. Correspondingly, within the active time or outside the active time, the network device sends the LP-WUS to the terminal device when there is the LP-WUS sending requirement. In this way, energy saving of the terminal device can be implemented.

If the terminal device detects the LP-WUS within the active time, the terminal device monitors the PDCCH after a third duration starting from the moment at which the LP-WUS is detected. Correspondingly, if the network device sends the LP-WUS within the active time, the network device sends the PDCCH to the terminal device when determining that there is the PDCCH sending requirement after the third duration starting from a moment at which the LP-WUS is sent.

Alternatively, if the terminal device detects the LP-WUS outside the active time, the terminal device monitors the PDCCH after a fourth duration starting from the moment at which the LP-WUS is detected. Correspondingly, if the network device sends the LP-WUS outside the active time, the network device sends the PDCCH to the terminal device when determining that there is the PDCCH sending requirement after the fourth duration starting from a moment at which the LP-WUS is sent.

The third duration is the same as or different from the fourth duration.

In a possible case, from a perspective of maximizing an energy saving benefit, if the terminal device does not determine when the LP-WUS arrives, when the terminal device monitors the LP-WUS, the main circuit of the terminal device may keep in a deep sleep state to save energy. The network device does not know which sleep state the terminal device is in, and can only assume that the terminal device is in a deep sleep state. In this case, it is assumed that a maximum latency (latency) may be caused. The third duration and the fourth duration are equal, and may be 20 ms, may be a value ranging from 10 ms to 20 ms, or may be another value. This is not limited in this application.

In another possible case, to reduce a latency, the terminal device may be in different sleep states within and outside the active time. For example, the terminal device is in a micro-sleep (micro-sleep) state within the active time, and the terminal device is in a deep sleep state outside the active time, to reduce power consumption gains and obtain a shorter average latency. Based on this, as predefined, the fourth duration corresponding to outside the active time may be greater than the third duration corresponding to within the active time. Alternatively, it may be understood as that a latency of monitoring the PDCCH outside the active time is greater than a latency of monitoring the PDCCH within the active time.

It should be noted that, regardless of whether the terminal device detects the WUS within the active time or outside the active time, when monitoring the PDCCH, the terminal device may stop monitoring the LP-WUS and monitor the PDCCH, or the terminal device may monitor both the LP-WUS and the PDCCH. This is not limited in this application.

To reduce a delay as much as possible, the terminal device needs to start to monitor the PDCCH as soon as possible after receiving the LP-WUS. However, according to a current protocol, the terminal device can monitor the PDCCH only within the active time. If the terminal device receives the LP-WUS outside the active time, even if the terminal device may start to monitor the PDCCH by using the main circuit, according to a definition in the existing standard, the network device does not immediately send the PDCCH to the terminal device, but can send the PDCCH only when the active time (for example, next latest OnDuration) arrives.

Based on this, optionally, after detecting the LP-WUS, the terminal device may stop monitoring the LP-WUS and start a first timer, where the active time includes running time of the first timer. Correspondingly, after sending the LP-WUS to the terminal device, the network device no longer sends another LP-WUS to the terminal device, but starts the first timer.

Further, the terminal device starts to monitor the PDCCH within the running time of the first timer within the active time. When the terminal device no longer monitors the LP-WUS, the terminal device monitors the PDCCH within the active time. Therefore, when the running time of the first timer is also defined as the active time, the terminal device monitors the PDCCH within the running time of the first timer. Correspondingly, the network device sends, within the running time of the first timer within the active time, the PDCCH to the terminal device when determining that there is the PDCCH sending requirement.

The first timer may be drx-InactivityTimer. Alternatively, the first timer may be a new timer (new timer). This is not limited in this application.

In an optional implementation, if the terminal device has a low requirement on a delay, after detecting the LP-WUS, the terminal device may stop monitoring the LP-WUS, and start to monitor the PDCCH within the active time (for example, next OnDuration) closest to the moment at which the LP-WUS is detected. Correspondingly, after sending the LP-WUS to the terminal device, the network device does not send the LP-WUS to the terminal device, and sends, from the active time closest to the moment at which the network device sends the LP-WUS, the PDCCH to the terminal device when there is the PDCCH sending requirement.

In an optional implementation, if DCP is configured for the terminal device, the terminal device does not monitor the DCP when monitoring the LP-WUS. Correspondingly, when determining that there is the LP-WUS sending requirement, the network device does not send the DCP to the terminal device when sending the LP-WUS to the terminal device.

In other words, a priority of monitoring the LP-WUS by the terminal device is higher than that of monitoring the DCP. This is because functions of both the LP-WUS and the DCP indicate whether to monitor the PDCCH, and the functions are overlapped. Therefore, the terminal device needs to monitor only one of the LP-WUS and the DCP. From a perspective of reducing power consumption of the terminal device, power consumption of monitoring the LP-WUS is lower than that of monitoring the DCP.

Optionally, if the terminal device does not detect the DCP on a monitoring occasion of the DCP when monitoring the LP-WUS, the terminal device determines not to start the DRX ON duration timer. It may also be understood as that when the terminal device monitors the LP-WUS but does not monitor the DCP, the terminal device does not wake up. Correspondingly, if the network device does not send the DCP on a sending occasion of the DCP, the network device determines not to start the DRX ON duration timer.

The terminal device may determine, by using the following methods, not to start the DRX ON duration timer:
Method f1: A physical layer of the terminal device sends first indication information to a medium access control layer of the terminal device, where the first indication information indicates that a decoding result of the DCP is 0; and the medium access control layer of the terminal device determines, based on the first indication information, not to start the DRX ON duration timer.

In the method f1, when the medium access control layer of the terminal device does not sense LP-WUS monitoring (that is, the medium access control layer does not know whether the terminal device is monitoring the LP-WUS), the physical layer of the terminal device reports, to the medium access control layer, that the decoding result corresponding to the DCP is 0, so that the medium access control layer controls not to start the DRX ON duration timer.

Based on the method f1, the terminal device can perform sensing only at the physical layer, thereby simplifying an internal protocol stack structure of the terminal device.

Method f2: A medium access control layer of the terminal device determines, based on that the terminal device is monitoring the LP-WUS, not to start the DRX ON duration timer.

In the method f2, when the medium access control layer of the terminal device senses LP-WUS monitoring (that is, the medium access control layer knows whether the terminal device is monitoring the LP-WUS), a physical layer reports, to the medium access control layer, that a decoding result corresponding to the DCP is 0; or a physical layer does not report a decoding result corresponding to the DCP to the medium access control layer, and the medium access control layer determines not to start the DRX ON duration timer because the LP-WUS is being monitored.

Based on the method f1, the medium access control layer may obtain more information and know about LP-WUS related information, which helps implement global control of PDCCH monitoring by the medium access control layer.

In an optional implementation, when monitoring the LP-WUS, the terminal device does not monitor PDCCH monitoring adaptation indication information (PDCCH monitoring adaptation field), where the PDCCH monitoring adaptation indication information indicates at least one of PDCCH skipping or search space set group switching. Correspondingly, if there is the LP-WUS sending requirement, when sending the LP-WUS to the terminal device, the network device does not send the PDCCH monitoring adaptation indication information to the terminal device.

In other words, a priority of monitoring the LP-WUS by the terminal device is higher than a priority of monitoring the PDCCH monitoring adaptation indication information.

In an optional implementation, after detecting the LP-WUS, the terminal device monitors the PDCCH within a fifth duration. If the PDCCH of the network device is not received in the fifth duration, the terminal device starts to monitor the LP-WUS, where the fifth duration is included in the LP-WUS, or the fifth duration is included in the configuration information of the LP-WUS.

Correspondingly, after the network device sends the LP-WUS to the terminal device, the network device sends the PDCCH to the terminal device when there is the PDCCH sending requirement in the fifth duration. If the network device determines that the PDCCH is not sent to the terminal device in the fifth duration, the network device may send the LP-WUS to the terminal device when there is the LP-WUS sending requirement.

For example, when the terminal device detects the LP-WUS, if the terminal device receives the LP-WUS associated with the terminal device and the LP-WUS indicates the fifth duration, the terminal device stops monitoring the LP-WUS and starts to monitor the PDCCH. If the terminal device does not receive scheduling in the fifth duration, the terminal device stops monitoring the PDCCH and starts to monitor the LP-WUS.

Optionally, the fifth duration may be implemented by using a timer. A value of running time of the timer may be preconfigured, may be predefined, or may be indicated by the LP-WUS. This is not limited in this application.

The foregoing method may be understood as that the network device may perform prediction to some extent when sending the LP-WUS. The network device indicates the terminal device to turn on the main circuit to monitor the PDCCH not necessarily after a service arrives, but in advance. In this way, a delay can be reduced. In addition, it may also be understood as some constraints on scheduling of the network device. After the network device sends the LP-WUS to the terminal device to trigger the terminal device to turn on the main circuit to monitor the PDCCH, the network device needs to start scheduling within a specific period of time (that is, in the fifth duration). In this case, the terminal device does not turn on, for an excessively long time, the main circuit to monitor the PDCCH. This helps the terminal device save energy and reduce a delay.

It should be noted that in this application, when monitoring the LP-WUS, the terminal device may continuously monitor the LP-WUS, or may discontinuously monitor the LP-WUS. For example, the terminal device may monitor the LP-WUS at some time domain locations.

Based on the foregoing communication method, a solution to monitoring an LP-WUS by a terminal device may be provided.

Based on the foregoing descriptions, an embodiment of this application further provides a communication method, to determine specific behavior of monitoring an LP-WUS by a terminal device when DRX is configured for the terminal device. As shown in FIG. 13, a procedure of the method may include the following steps.

Step 1301: A terminal device is configured with C-DRX by a network device. Correspondingly, the network device configures C-DRX for the terminal device.

Step 1302: The terminal device monitors an LP-WUS within active time, where the LP-WUS is for waking up the terminal device.

For a specific implementation method in which the LP-WUS is for waking up the terminal device, refer to related descriptions in the embodiment shown in FIG. 9. Details are not described herein again.

Step 1303: The terminal device deactivates PDCCH monitoring within the active time.

In other words, the terminal device does not monitor the PDCCH.

Step 1304: The network device sends, within the active time, the LP-WUS to the terminal device when there is an LP-WUS sending requirement.

For specific descriptions of the active time, refer to related descriptions in the embodiment shown in FIG. 9. Details are not described herein again.

In an optional implementation, if the terminal device detects the LP-WUS within the active time, the terminal device monitors the PDCCH after a third duration starting from a moment at which the LP-WUS is detected. Correspondingly, if the network device sends the LP-WUS within the active time, the network device determines that the terminal device monitors the PDCCH after the third duration starting from a moment at which the LP-WUS is sent.

In another optional implementation, the terminal device may monitor the LP-WUS outside the active time; and if the terminal device detects the LP-WUS outside the active time, the terminal device monitors the PDCCH after a fourth duration starting from a moment at which the LP-WUS is detected. Correspondingly, when there is the LP-WUS sending requirement outside the active time, the network device sends the LP-WUS to the terminal device; and if the network device sends the LP-WUS outside the active time, the network device determines that the terminal device monitors the PDCCH after the fourth duration starting from the moment at which the LP-WUS is sent.

The third duration is the same as or different from the fourth duration.

For a specific solution in which the terminal device monitors the LP-WUS within the active time or outside the active time, refer to related descriptions in the embodiment shown in FIG. 9. Details are not described herein again.

Further, for a method for starting to monitor the PDCCH after the terminal device detects the LP-WUS, refer to related descriptions in the embodiment shown in FIG. 9. Details are not described herein again.

In an optional implementation, DCP may be configured for the terminal device. Specifically, if the DCP is configured for the terminal device, for specific behavior of the terminal device or the network device, refer to related descriptions in the embodiment shown in FIG. 9. Details are not described herein again.

In another optional implementation, PDCCH monitoring adaptation indication information may be configured for the terminal device. Specifically, if the monitoring adaptation indication information is configured for the terminal device, for specific behavior of the terminal device or the network device, refer to related descriptions in the embodiment shown in FIG. 9. Details are not described herein again.

Optionally, after detecting the LP-WUS, the terminal device may monitor the PDCCH in the fifth duration. Correspondingly, after the network device sends the LP-WUS to the terminal device, the network device sends the PDCCH to the terminal device when there is the PDCCH sending requirement in the fifth duration. For specific descriptions, refer to related descriptions in the embodiment shown in FIG. 9. Details are not described herein again.

In addition, for a modulation scheme of the LP-WUS or configuration information of the LP-WUS, and a manner of receiving the LP-WUS and the PDCCH, refer to related descriptions in the embodiment shown in FIG. 9. Details are not described herein again.

Based on the foregoing communication method, specific behavior of monitoring the LP-WUS by the terminal device when DRX is configured for the terminal device may be determined.

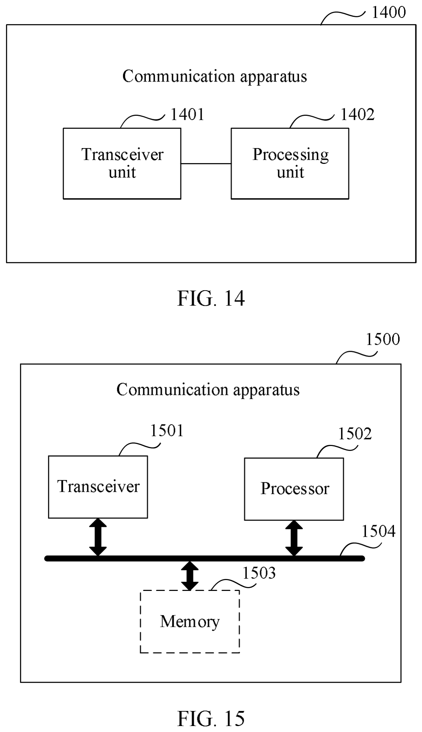

Based on the foregoing embodiments, an embodiment of this application further provides a communication apparatus. As shown in FIG. 14, a communication apparatus 1400 may include a transceiver unit 1401 and a processing unit 1402. The transceiver unit 1401 is configured to be used by the communication apparatus 1400 to receive information (a signal, a message, or data) or send information (a signal, a message, or data). The processing unit 1402 is configured to control and manage an action of the communication apparatus 1400. The processing unit 1402 may further control steps performed by the transceiver unit 1401.

For example, the communication apparatus 1400 may be specifically the terminal device in the foregoing embodiments or a processor, a chip, a chip system, a functional module, or the like in the terminal device. Alternatively, the communication apparatus 1400 may be specifically the network device in the foregoing embodiments or a processor, a chip, a chip system, a functional module, or the like in the network device.

In an embodiment, when the communication apparatus 1400 is configured to implement a function of the terminal device in the embodiment shown in FIG. 9, the following may be specifically included: The processing unit 1402 may be configured to: determine whether a condition for monitoring a low power wake up signal LP-WUS is met, where the LP-WUS is for waking up the terminal device; and monitor the LP-WUS when determining that the condition for monitoring the LP-WUS is met. The transceiver unit 1401 is configured to receive and send a signal such as the LP-WUS by the terminal device.

In an implementation, when determining that the condition for monitoring the LP-WUS is met, the processing unit 1402 may be configured to: control the transceiver unit 1401 to receive first information from a network device, where the first information indicates the terminal device to monitor the LP-WUS; or determine that scheduling information is not received from the network device in a first duration.

Optionally, when determining that the condition for monitoring the LP-WUS is met, the processing unit 1402 may be further configured to determine that a first channel quality parameter is greater than or equal to a first threshold, where the first channel quality parameter is at least one of the following: reference signal received power RSRP, reference signal received quality RSRQ, an LP-WUS detection probability, or a low power synchronization signal LP-SS detection probability.

In a possible implementation, when monitoring the LP-WUS, the processing unit 1402 may be configured to start to monitor the LP-WUS at a first moment.

For example, the first moment is related to a second moment, and the second moment is a moment at which the transceiver unit 1401 receives the first information, or an end moment of the first duration.

In an optional implementation, when monitoring the LP-WUS, the processing unit 1402 is further configured to: determine whether a condition for monitoring a physical downlink control channel PDCCH is met; and monitor the PDCCH when determining that the condition for monitoring the PDCCH is met.

Optionally, when determining that the condition for monitoring the PDCCH is met, the processing unit 1402 may be configured to: meet a first condition and/or a second condition. The first condition includes: controlling the transceiver unit 1401 to detect the LP-WUS from the network device; controlling the transceiver unit 1401 to send uplink service information; or not detecting the LP-WUS in a second duration. The second condition includes: determining that a second channel quality parameter is less than or equal to a second threshold, where the second channel quality parameter is at least one of the following: reference signal received power RSRP, reference signal received quality RSRQ, an LP-WUS detection probability, or a low-power synchronization signal LP-SS detection probability.

In an implementation, when monitoring the PDCCH, the processing unit 1402 may be configured to start to monitor the PDCCH at a third moment.

Optionally, the transceiver unit 1401 may be further configured to: before the processing unit 1402 monitors the PDCCH, send feedback information to the network device after the third moment, where the feedback information indicates that the terminal device does not monitor the LP-WUS or indicates that the terminal device starts to monitor the PDCCH.

For example, the third moment is related to a fourth moment, and the fourth moment is a moment at which the terminal device detects the LP-WUS, a moment at which transmission of the uplink service information is completed, or an end moment of the second duration.

In an optional implementation, connected discontinuous reception C-DRX is configured for the terminal device. The processing unit 1402 is further configured to skip monitoring the PDCCH when monitoring the LP-WUS within active time.

In another optional implementation, connected discontinuous reception C-DRX is configured for the terminal device. The processing unit 1402 monitors the LP-WUS within the active time or outside the active time; and if the LP-WUS is detected within the active time, monitors the PDCCH after a third duration starting from a moment at which the LP-WUS is detected; or if the LP-WUS is detected outside the active time, monitors the PDCCH after a fourth duration starting from a moment at which the LP-WUS is detected, where the third duration is the same as or different from the fourth duration.

In an example, the active time includes at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles.

In a possible implementation, the processing unit 1402 may be further configured to: after the LP-WUS is detected, stop monitoring the LP-WUS and start a first timer, where the active time includes running time of the first timer.

In an optional implementation, the processing unit 1402 may be further configured to start to monitor the PDCCH within running time of the first timer within the active time.

In another optional implementation, the processing unit 1402 may be further configured to: after detecting the LP-WUS, stop monitoring the LP-WUS, and start to monitor the PDCCH within the active time closest to a moment at which the LP-WUS is detected.

In a possible implementation, the terminal device is configured to monitor downlink control information scrambled by a power saving radio network temporary identifier DCP. The processing unit 1402 may be further configured to skip monitoring the DCP when monitoring the LP-WUS.

Further, the processing unit 1402 may be further configured to: if the DCP is not detected on a monitoring occasion of the DCP when the LP-WUS is monitored, determine not to start a DRX ON duration timer.

For example, when determining not to start the DRX ON duration timer, the processing unit 1402 may be configured to: control a physical layer to send first indication information to a medium access control layer, where the first indication information indicates that a decoding result of the DCP is 0; and control the medium access control layer to determine, based on the first indication information, not to start the DRX ON duration timer; or control the medium access control layer to determine, based on that the terminal device is monitoring the LP-WUS, not to start the DRX ON duration timer.

In still another possible implementation, the processing unit 1402 is further configured to skip monitoring PDCCH monitoring adaptation indication information when monitoring the LP-WUS, where the PDCCH monitoring adaptation indication information indicates at least one of PDCCH skipping or search space set group switching.

In an example, that the LP-WUS is for waking up the terminal device includes: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device.

Optionally, the processing unit 1402 is further configured to: after detecting the LP-WUS, monitor the PDCCH within a fifth duration; and if the PDCCH of the network device is not received in the fifth duration, start to monitor the LP-WUS, where the fifth duration is included in the LP-WUS, or the fifth duration is included in configuration information of the LP-WUS.

Optionally, the transceiver unit 1401 is further configured to: before the processing unit 1402 monitors the LP-WUS, receive the configuration information of the LP-WUS from the network device.

For example, the LP-WUS uses on off keying OOK modulation or frequency shift keying FSK modulation.

Optionally, the LP-WUS is received by a first circuit of the terminal device, the PDCCH is received by a second circuit of the terminal device, and the first circuit is different from the second circuit.

In another embodiment, when the communication apparatus 1400 is configured to implement a function of the network device in the embodiment shown in FIG. 9, the following may be specifically included: The processing unit 1402 is configured to determine whether a terminal device meets a condition for monitoring a low power wake up signal LP-WUS, where the LP-WUS is for waking up the terminal device. The transceiver unit 1401 is configured to send the LP-WUS to the terminal device if the processing unit 1402 determines that the terminal device meets the condition for monitoring the LP-WUS and when there is an LP-WUS sending requirement.

In an optional implementation, when determining that the terminal device meets the condition for monitoring the LP-WUS, the processing unit 1402 is configured to: control the transceiver unit 1401 to send first information to the terminal device, where the first information indicates the terminal device to monitor the LP-WUS; or determine that the transceiver unit 1401 does not send scheduling information to the terminal device in a first duration.

Optionally, when determining that the terminal device meets the condition for monitoring the LP-WUS, the processing unit 1402 is further configured to control the transceiver unit 1401 to receive first channel feedback information from the terminal device, where the first channel feedback information indicates that a first channel quality parameter is greater than or equal to a first threshold, where the first channel quality parameter is at least one of the following: reference signal received power RSRP, reference signal received quality RSRQ, an LP-WUS detection probability, or a low power synchronization signal LP-SS detection probability.

In a possible implementation, when sending the LP-WUS to the terminal device when there is the LP-WUS sending requirement, the transceiver unit 1401 is configured to send the LP-WUS to the terminal device from a first moment and when there is the LP-WUS sending requirement.

For example, the first moment is related to a second moment, and the second moment is a moment at which the network device sends the first information, or an end moment of the first duration.

In an optional implementation, after determining that the terminal device meets the condition for monitoring the LP-WUS, the processing unit 1402 is further configured to: determine whether the terminal device meets the condition for monitoring a downlink control channel PDCCH; and after determining that the terminal device meets the condition for monitoring the PDCCH, control the transceiver unit 1401 to send the PDCCH to the terminal device when there is a PDCCH sending requirement.

Optionally, when determining that the terminal device meets the condition for monitoring the PDCCH, the processing unit 1402 is configured to: meet a first condition and/or a second condition. The first condition includes: when there the LP-WUS sending requirement, controlling the transceiver unit 1401 to send the LP-WUS to the terminal device; or controlling the transceiver unit 1401 to receive uplink service information; or controlling the transceiver unit 1401 not to send the LP-WUS in a second duration. The second condition includes: controlling the transceiver unit 1401 to receive second channel feedback information from the terminal device, where the second channel feedback information indicates that a second channel quality parameter is less than or equal to a second threshold, and the second channel quality parameter is at least one of the following: reference signal received power RSRP, reference signal received quality RSRQ, an LP-WUS detection probability, or a low power synchronization signal LP-SS detection probability.

Optionally, when controlling the transceiver unit 1401 to send the PDCCH to the terminal device when there is the PDCCH sending requirement, the processing unit 1402 is configured to: control the transceiver unit 1401 to send the PDCCH to the terminal device from a third moment and when there is the PDCCH sending requirement.

In a possible implementation, before controlling the transceiver unit 1401 to send the PDCCH to the terminal device when there is the PDCCH sending requirement, the processing unit 1402 is further configured to control the transceiver unit 1401 to receive feedback information from the terminal device after a third moment, where the feedback information indicates that the terminal device does not monitor the LP-WUS or indicates that the terminal device starts to monitor the PDCCH.

For example, the third moment is related to a fourth moment, and the fourth moment is a moment at which the network device sends the LP-WUS, a moment at which transmission of the uplink service information is completed, or an end moment of the second duration.

Optionally, connected discontinuous reception C-DRX is configured for the terminal device. The transceiver unit 1401 is further configured to: within active time and when there is the LP-WUS sending requirement, skip sending the PDCCH to the terminal device when sending the LP-WUS to the terminal device.

Optionally, connected discontinuous reception C-DRX is configured for the terminal device. The transceiver unit 1401 is further configured to: within the active time or outside the active time, send the LP-WUS to the terminal device when there is the LP-WUS sending requirement; and if sending the LP-WUS within the active time, send the PDCCH to the terminal device when determining that there is the PDCCH sending requirement after a third duration starting from a moment at which the LP-WUS is sent; or if sending the LP-WUS outside the active time, send the PDCCH to the terminal device when determining that there is the PDCCH sending requirement after a fourth duration starting from a moment at which the LP-WUS is sent, where the third duration is the same as or different from the fourth duration.

For example, the active time includes at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles.

In a possible implementation, the transceiver unit 1401 may be further configured to skip sending the LP-WUS to the terminal device after sending the LP-WUS to the terminal device, and the processing unit 1402 may be further configured to start a first timer, where the active time includes running time of the first timer.

Optionally, the transceiver unit 1401 may be further configured to: send, within the running time of the first timer within the active time, the PDCCH to the terminal device when determining that there is the PDCCH sending requirement.

In an example, the transceiver unit 1401 may be further configured to: after sending the LP-WUS to the terminal device, skip sending the LP-WUS to the terminal device, and send, from the active time closest to a moment at which the network device sends the LP-WUS, the PDCCH to the terminal device when there is the PDCCH sending requirement.

In a possible implementation, the terminal device is configured to monitor downlink control information scrambled by a power saving radio network temporary identifier DCP. The transceiver unit 1401 is further configured to: when determining that there is the LP-WUS sending requirement, skip sending the DCP to the terminal device when sending the LP-WUS to the terminal device.

Optionally, the processing unit 1402 is further configured to: if the transceiver unit 1401 does not send the DCP on a sending occasion of the DCP, determine not to start a DRX ON duration timer.

In a possible implementation, the transceiver unit 1401 may be further configured to: when determining that there is the LP-WUS sending requirement, skip sending PDCCH monitoring adaptation indication information to the terminal device when sending the LP-WUS to the terminal device, where the PDCCH monitoring adaptation indication information indicates at least one of PDCCH skipping or search space set group switching.

In an example, that the LP-WUS is for waking up the terminal device includes: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device.

Optionally, the transceiver unit 1401 is further configured to: after sending the LP-WUS to the terminal device, send the PDCCH to the terminal device when the network device has the PDCCH sending requirement in the fifth duration; and if it is determined that the PDCCH is not sent to the terminal device in the fifth duration, send the LP-WUS to the terminal device when the network device has the LP-WUS sending requirement. The fifth duration is included in the LP-WUS, or the fifth duration is included in configuration information of the LP-WUS.

In an optional implementation, the transceiver unit 1401 is further configured to: when the processing unit 1402 determines that the terminal device meets the condition for monitoring the LP-WUS and there is the LP-WUS sending requirement, before sending the LP-WUS to the terminal device, send the configuration information of the LP-WUS to the terminal device.

For example, the LP-WUS uses on off keying OOK modulation or frequency shift keying FSK modulation.

In another embodiment, when the communication apparatus 1400 is configured to implement a function of the terminal device in the embodiment shown in FIG. 13, the following may be specifically included: The transceiver unit is configured to receive, from a network device, information for configuring connected discontinuous reception C-DRX. The processing unit 1402 is configured to: monitor a low power wake up signal LP-WUS within active time, where the LP-WUS is for waking up the terminal device; and deactivate PDCCH monitoring within the active time.

For example, the active time includes at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles.

Optionally, the processing unit 1402 is further configured to: if the LP-WUS is detected within the active time, the terminal device monitors the PDCCH after a third duration starting from a moment at which the LP-WUS is detected; or monitor the LP-WUS outside the active time; and if the LP-WUS is detected outside the active time, the terminal device monitors the PDCCH after a fourth duration starting from a moment at which the LP-WUS is detected. The third duration is the same as or different from the fourth duration.

In a possible implementation, the processing unit 1402 is further configured to: after the LP-WUS is detected, stop monitoring the LP-WUS and start a first timer, where the active time includes running time of the first timer.

Optionally, the processing unit 1402 is further configured to start to monitor the PDCCH within running time of the first timer within the active time.

In another possible implementation, the processing unit 1402 is further configured to: after detecting the LP-WUS, stop monitoring the LP-WUS, and start to monitor the PDCCH within the active time closest to a moment at which the LP-WUS is detected.

In an optional implementation, the terminal device is configured to monitor downlink control information scrambled by a power saving radio network temporary identifier DCP. The processing unit 1402 is further configured to skip monitoring the DCP when monitoring the LP-WUS.

Optionally, the processing unit 1402 is further configured to: if the DCP is not detected on a monitoring occasion of the DCP when the LP-WUS is monitored, determine not to start a DRX ON duration timer.

For example, when determining not to start the DRX ON duration timer, the processing unit 1402 is configured to: control a physical layer to send first indication information to a medium access control layer of the terminal device, where the first indication information indicates that a decoding result of the DCP is 0; and control the medium access control layer to determine, based on the first indication information, not to start the DRX ON duration timer; or control the medium access control layer to determine, based on that the terminal device is monitoring the LP-WUS, not to start the DRX ON duration timer.

In an optional implementation, the processing unit 1402 is further configured to skip monitoring PDCCH monitoring adaptation indication information when monitoring the LP-WUS, where the PDCCH monitoring adaptation indication information indicates at least one of PDCCH skipping or search space set group switching.

For example, that the LP-WUS is for waking up the terminal device includes: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device.

Optionally, the processing unit 1402 is further configured to: after detecting the LP-WUS, monitor the PDCCH within a fifth duration; and if the transceiver unit 1401 does not receive the PDCCH of the network device in the fifth duration, start to monitor the LP-WUS, where the fifth duration is included in the LP-WUS, or the fifth duration is included in configuration information of the LP-WUS.

In a possible design, the transceiver unit 1401 is further configured to: before the processing unit 1402 monitors the LP-WUS within the active time, receive the configuration information of the LP-WUS from the network device.

For example, the LP-WUS uses on off keying OOK modulation or frequency shift keying FSK modulation.

In an example, the LP-WUS is received by a first circuit of the terminal device, the PDCCH is received by a second circuit of the terminal device, and the first circuit is different from the second circuit.

In another embodiment, when the communication apparatus 1400 is configured to implement a function of the network device in the embodiment shown in FIG. 13, the following may be specifically included: The transceiver unit 1401 is configured to send, to a terminal device, information for configuring connected discontinuous reception C-DRX; and when there is a low power wake up signal LP-WUS transmission requirement within active time, send an LP-WUS to the terminal device. The LP-WUS is for waking up the terminal device. The processing unit 1402 is configured to deactivate sending of a PDCCH.

For example, the active time includes at least one of the following: time of at least one running timer in a DRX ON duration timer, a DRX inactivity timer, a DRX downlink retransmission timer, a DRX uplink retransmission timer, or a random access contention resolution timer; time within which a scheduling request has been sent on a physical uplink control channel PUCCH and the scheduling request is pending; after the terminal device successfully receives a random access response of a random access preamble, time within which a new transmission indicated by a PDCCH and addressed to a cell radio network temporary identifier C-RNTI of a medium access control MAC entity has not been received, where the random access preamble is not selected by the MAC entity from contention-based random access preambles.

Optionally, the transceiver unit 1401 is further configured to: if sending the LP-WUS within the active time, send the PDCCH to the terminal device when determining that there is the PDCCH sending requirement after a third duration starting from a moment at which the LP-WUS is sent; or send the LP-WUS to the terminal device when there is the LP-WUS sending requirement outside the active time; and if sending the LP-WUS outside the active time, send the PDCCH to the terminal device when determining that there is the PDCCH sending requirement after a fourth duration starting from a moment at which the LP-WUS is sent, where the third duration is the same as or different from the fourth duration.

In a possible implementation, the transceiver unit 1401 is further configured to: after sending the LP-WUS to the terminal device, determine not to send the LP-WUS to the terminal device. The processing unit 1402 is further configured to start a first timer, where the active time includes running time of the first timer.

Optionally, the transceiver unit 1401 is further configured to: send, within the running time of the first timer within the active time, the PDCCH to the terminal device when determining that there is the PDCCH sending requirement.

In a possible implementation, the transceiver unit 1401 is further configured to: after sending the LP-WUS to the terminal device, skip sending the LP-WUS to the terminal device, and send, from the active time closest to a moment at which the network device sends the LP-WUS, the PDCCH to the terminal device when there is the PDCCH sending requirement.

In an optional implementation, the terminal device is configured to monitor downlink control information scrambled by a power saving radio network temporary identifier DCP. The transceiver unit 1401 is further configured to: when determining that there is the LP-WUS sending requirement, skip sending the DCP to the terminal device when sending the LP-WUS to the terminal device.

Optionally, the processing unit 1402 is further configured to: if the transceiver unit 1401 does not send the DCP on a sending occasion of the DCP, determine not to start a DRX ON duration timer.

In still another optional implementation, the transceiver unit 1401 is further configured to: when determining that there is the LP-WUS sending requirement, skip sending PDCCH monitoring adaptation indication information to the terminal device when sending the LP-WUS to the terminal device, where the PDCCH monitoring adaptation indication information indicates at least one of PDCCH skipping or search space set group switching.

For example, that the LP-WUS is for waking up the terminal device includes: The LP-WUS includes an identifier of the terminal device, and the identifier of the terminal device is for waking up the terminal device; the LP-WUS includes partial information of an identifier of the terminal device, and the partial information of the identifier of the terminal device and a first time domain location occupied by the LP-WUS are for waking up the terminal device, where the first time domain location is related to the identifier of the terminal device; the LP-WUS includes partial information of an identifier of a terminal device group, and the partial information of the identifier of the terminal device group and a second time domain location occupied by the LP-WUS are for waking up the terminal device, where the second time domain location is related to the identifier of the terminal device group; the LP-WUS includes an identifier of the terminal device group, and the identifier of the terminal device group is for waking up the terminal device group, where the terminal device group includes the terminal device; or the LP-WUS includes a plurality of bits, and the plurality of bits correspond to a plurality of terminal devices, where a first bit in the plurality of bits is for waking up the terminal device.

Optionally, the transceiver unit 1401 is further configured to: after sending the LP-WUS to the terminal device, send the PDCCH to the terminal device when there is the PDCCH sending requirement in the fifth duration; and if it is determined that the PDCCH is not sent to the terminal device in the fifth duration, send the LP-WUS to the terminal device when there is the LP-WUS sending requirement. The fifth duration is included in the LP-WUS, or the fifth duration is included in configuration information of the LP-WUS.

In an example, the transceiver unit 1401 is further configured to: when there is the LP-WUS sending requirement within the active time, before sending the LP-WUS to the terminal device, send the configuration information of the LP-WUS to the terminal device.

For example, the LP-WUS uses on off keying OOK modulation or frequency shift keying FSK modulation.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device

(which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 15, a communication apparatus 1500 may include a transceiver 1501 and a processor 1502. Optionally, the communication apparatus 1500 may further include a memory 1503. The memory 1503 may be disposed inside the communication apparatus 1500, or may be disposed outside the communication apparatus 1500. The processor 1502 may control the transceiver 1501 to receive and send packets, information, messages, data, or the like.

Specifically, the processor 1502 may be a central processing unit (central processing unit, CPU), a network processor (network processor, NP), or a combination of the CPU and the NP. The processor 1502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1501, the processor 1502, and the memory 1503 are connected to each other. Optionally, the transceiver 1501, the processor 1502, and the memory 1503 are connected to each other through a bus 1504. The bus 1504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

In an optional implementation, the memory 1503 is configured to store a program and the like. Specifically, the program may include program code, and the program code includes computer operation instructions. The memory 1503 may include a RAM, and may further include a non-volatile memory (non-volatile memory), for example, one or more magnetic disk memories. The processor 1502 executes an application program stored in the memory 1503, to implement the foregoing functions, to implement a function of the communication apparatus 1500.

For example, the communication apparatus 1500 may be the network device in the foregoing embodiments, or may be the terminal device in the foregoing embodiments.

In an embodiment, when the communication apparatus 1500 implements a function of the terminal device in the embodiment shown in FIG. 9, the transceiver 1501 may implement a receiving/sending operation performed by the terminal device in the embodiment shown in FIG. 9, and the processor 1502 may implement an operation other than the receiving/sending operation performed by the terminal device in the embodiment shown in FIG. 9. Specifically, for related specific descriptions, refer to related descriptions in the embodiment shown in FIG. 9. Details are not described herein again.

In another embodiment, when the communication apparatus 1500 implements a function of the network device in the embodiment shown in FIG. 9, the transceiver 1501 may implement a receiving/sending operation performed by the network device in the embodiment shown in FIG. 9, and the processor 1502 may implement an operation other than the receiving/sending operation performed by the network device in the embodiment shown in FIG. 9. Specifically, for related specific descriptions, refer to related descriptions in the embodiment shown in FIG. 9. Details are not described herein again.

In another embodiment, when the communication apparatus 1500 implements a function of the terminal device in the embodiment shown in FIG. 13, the transceiver 1501 may implement a receiving/sending operation performed by the terminal device in the embodiment shown in FIG. 13, and the processor 1502 may implement an operation other than the receiving/sending operation performed by the terminal device in the embodiment shown in FIG. 13. Specifically, for related specific descriptions, refer to related descriptions in the embodiment shown in FIG. 13. Details are not described herein again.

In another embodiment, when the communication apparatus 1500 implements a function of the network device in the embodiment shown in FIG. 13, the transceiver 1501 may implement a receiving/sending operation performed by the network device in the embodiment shown in FIG. 13, and the processor 1502 may implement an operation other than the receiving/sending operation performed by the network device in the embodiment shown in FIG. 13. Specifically, for related specific descriptions, refer to related descriptions in the embodiment shown in FIG. 13. Details are not described herein again.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the communication methods provided in the method embodiments.

An embodiment of this application further provides a computer program product. The computer program product is configured to store a computer program. When the computer program is executed by a computer, the computer may implement the communication methods provided in the method embodiments.

An embodiment of this application further provides a chip, including a processor. The processor is coupled to a memory, and is configured to invoke a program in the memory, so that the chip implements the communication methods provided in the method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage medium (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining whether a condition for monitoring a low power wake up signal LP-WUS is met, wherein the LP-WUS is for waking up a terminal device; and
monitoring the LP-WUS when determining that the condition for monitoring the LP-WUS is met.

2. The method according to claim 1, wherein determining that the condition for monitoring the LP-WUS is met comprises:
receiving first information from a network device, wherein the first information indicates the terminal device to monitor the LP-WUS; or determining that scheduling information is not received from the network device in a first duration.

3. The method according to claim 2, wherein monitoring the LP-WUS comprises:
starting to monitor the LP-WUS at a first moment.

4. The method according to any one of claims 1 to 3, wherein during monitoring the LP-WUS, the method further comprises:
determining whether a condition for monitoring a physical downlink control channel PDCCH is met; and
monitoring the PDCCH when determining that the condition for monitoring the PDCCH is met.

5. The method according to claim 4, wherein determining that the condition for monitoring the PDCCH is met comprises:
a first condition and/or a second condition are/is met, wherein
the first condition comprises: the LP-WUS from the network device is detected; uplink service information is sent; or the LP-WUS is not detected in a second duration; and
the second condition comprises: determining that a second channel quality parameter is less than or equal to a second threshold, wherein the second channel quality parameter is at least one of the following: reference signal received power RSRP, reference signal received quality RSRQ, an LP-WUS detection probability, or a low-power synchronization signal LP-SS detection probability.

6. The method according to claim 4 or 5, wherein before monitoring the PDCCH, the method further comprises:
sending feedback information to the network device after a third moment, wherein the feedback information indicates not monitoring the LP-WUS or indicates starting to monitor the PDCCH.

7. The method according to any one of claims 1 to 6, wherein connected discontinuous reception C-DRX is configured for the terminal device, and the method further comprises:
skipping monitoring the PDCCH when monitoring the LP-WUS is monitored within active time.

8. The method according to any one of claims 1 to 7, wherein the connected discontinuous reception C-DRX is configured for the terminal device, and the method further comprises:
monitoring the LP-WUS within the active time or outside the active time; and
if the LP-WUS is detected within the active time, monitoring the PDCCH after a third duration starting from a moment at which the LP-WUS is detected; or
if the LP-WUS is detected outside the active time, monitoring the PDCCH after a fourth duration starting from a moment at which the LP-WUS is detected, wherein
the third duration is the same as or different from the fourth duration.

9. The method according to claim 7 or 8, wherein the method further comprises:
after the LP-WUS is detected, stopping monitoring the LP-WUS and starting a first timer, wherein the active time comprises running time of the first timer.

10. The method according to any one of claims 1 to 9, wherein the terminal device is configured to monitor downlink control information scrambled by a power saving radio network temporary identifier DCP, and the method further comprises:
skipping monitoring the DCP when monitoring the LP-WUS.

11. The method according to claim 10, wherein the method further comprises:
if the DCP is not detected on a monitoring occasion of the DCP when the LP-WUS is monitored, determining not to start a DRX ON duration timer.

12. The method according to any one of claims 1 to 11, wherein the method further comprises:
after the LP-WUS is detected, monitoring the PDCCH in a fifth duration; and
if the PDCCH of the network device is not received in the fifth duration, starting to monitor the LP-WUS, wherein
the fifth duration is comprised in the LP-WUS, or the fifth duration is comprised in configuration information of the LP-WUS.

13. A communication method, comprising:
determining whether a terminal device meets a condition for monitoring a low power wake up signal LP-WUS, wherein the LP-WUS is for waking up the terminal device; and
if determining that the terminal device meets the condition for monitoring the LP-WUS, sending the LP-WUS to the terminal device when there is an LP-WUS sending requirement.

14. The method according to claim 13, wherein determining that the terminal device meets the condition for monitoring the LP-WUS comprises:
sending first information to the terminal device, wherein the first information indicates the terminal device to monitor the LP-WUS; or determining that scheduling information is not sent to the terminal device in a first duration.

15. The method according to claim 14, wherein sending the LP-WUS to the terminal device when there is the LP-WUS sending requirement comprises:
sending the LP-WUS to the terminal device from a first moment and when there is the LP-WUS sending requirement.

16. The method according to any one of claims 13 to 15, wherein after determining that the terminal device meets the condition for monitoring the LP-WUS, the method further comprises:
determining whether the terminal device meets a condition for monitoring a downlink control channel PDCCH; and
if determining that the terminal device meets the condition for monitoring the PDCCH, sending the PDCCH to the terminal device when there is a PDCCH sending requirement.

17. The method according to claim 16, wherein determining that the terminal device meets the condition for monitoring the PDCCH comprises:
a first condition and/or a second condition are/is met, wherein
the first condition comprises: the LP-WUS is sent to the terminal device when there is the LP-WUS sending requirement; uplink service information is received; or the LP-WUS is not sent in a second duration; and
the second condition comprises: receiving second channel feedback information from the terminal device, wherein the second channel feedback information indicates that a second channel quality parameter is less than or equal to a second threshold, wherein the second channel quality parameter is at least one of the following: reference signal received power RSRP, reference signal received quality RSRQ, an LP-WUS detection probability, or a low-power synchronization signal LP-SS detection probability.

18. The method according to claim 16 or 17, wherein before sending the PDCCH to the terminal device when there is the PDCCH sending requirement, the method further comprises:
receiving feedback information from the terminal device after a third moment, wherein the feedback information indicates that the terminal device does not monitor the LP-WUS or indicates that the terminal device starts to monitor the PDCCH.

19. The method according to any one of claims 13 to 18, wherein connected discontinuous reception C-DRX is configured for the terminal device, and the method further comprises:
within active time and when there is the LP-WUS sending requirement, skipping sending the PDCCH to the terminal device when sending the LP-WUS to the terminal device.

20. The method according to any one of claims 13 to 19, wherein the connected discontinuous reception C-DRX is configured for the terminal device, and the method further comprises:
within the active time or outside the active time, sending the LP-WUS to the terminal device when there is the LP-WUS sending requirement; and
if the LP-WUS is sent within the active time, sending the PDCCH to the terminal device when determining that there is the PDCCH sending requirement after a third duration starting from a moment at which the LP-WUS is sent; or
if the LP-WUS is sent outside the active time, sending the PDCCH to the terminal device when determining that there is the PDCCH sending requirement after a fourth duration starting from a moment at which the LP-WUS is sent, wherein
the third duration is the same as or different from the fourth duration.

21. The method according to claim 19 or 20, wherein the method further comprises:
after the LP-WUS is sent to the terminal device, skipping sending the LP-WUS to the terminal device and starting a first timer, wherein the active time comprises running time of the first timer.

22. The method according to any one of claims 13 to 21, wherein the terminal device is configured to monitor downlink control information scrambled by a power saving radio network temporary identifier DCP, and the method further comprises:
when determining that there is the LP-WUS sending requirement, skipping sending the DCP to the terminal device when sending the LP-WUS to the terminal device.

23. The method according to claim 22, wherein the method further comprises:
if the DCP is not sent on a sending occasion of the DCP, determining not to start a DRX ON duration timer.

24. The method according to any one of claims 13 to 23, wherein the method further comprises:
after the LP-WUS is sent to the terminal device, sending the PDCCH to the terminal device when there is the PDCCH sending requirement in a fifth duration; and
if determining that the PDCCH is not sent to the terminal device in the fifth duration, sending the LP-WUS to the terminal device when there is the LP-WUS sending requirement, wherein
the fifth duration is comprised in the LP-WUS, or the fifth duration is comprised in configuration information of the LP-WUS.

25. A communication apparatus, comprising a memory, a processor, and a transceiver,
wherein
the memory is configured to store computer instructions;
the transceiver is configured to receive and send a signal; and
the processor is coupled to the memory, and is configured to invoke the computer instructions in the memory, to perform the method according to any one of claims 1 to 12 by using the transceiver.

26. A communication apparatus, comprising a memory, a processor, and a transceiver,
wherein
the memory is configured to store computer instructions;
the transceiver is configured to receive and send a signal; and
the processor is coupled to the memory, and is configured to invoke the computer instructions in the memory, to perform the method according to any one of claims 13 to 24 by using the transceiver.

27. A computer-readable storage medium, wherein the computer-readable storage medium stores computer-executable instructions; and when the computer-executable instructions are invoked by a computer, the method according to any one of claims 1 to 12 or the method according to any one of claims 13 to 24 is performed.

28. A computer program product, comprising instructions, wherein when the instructions are run on a computer, the method according to any one of claims 1 to 12 or the method according to any one of claims 13 to 24 is performed.

29. A chip, wherein the chip is coupled to a memory, and is configured to read and execute program instructions stored in the memory, to implement the method according to any one of claims 1 to 12 or implement the method according to any one of claims 13 to 24.
